# EUROPEAN PATENT APPLICATION

(11) **EP 4 191 922 A1**
(43) Date of publication of application: **07.06.2023**
(21) Application number: 20948127.4
(22) Date of filing: 07.08.2020
(51) Int. Cl.: H04L 5/00, H04W 72/04

(54) **COMMUNICATION METHOD AND COMMUNICATION APPARATUS**

(71) Applicant: Huawei Technologies Co., Ltd., Shenzhen, Guangdong 518129 (CN)
(72) Inventor: DONG, Lei, Shenzhen, Guangdong 518129 (CN); SU, Hongjia, Shenzhen, Guangdong 518129 (CN); GUO, Wenting, Shenzhen, Guangdong 518129 (CN); LU, Lei, Shenzhen, Guangdong 518129 (CN)
(74) Representative: Gill Jennings & Every LLP
(86) International application number: PCT/CN2020/107821
(87) International publication number: WO 2022/027594

(57) **Abstract**

This application provides a communication method and a communication apparatus. The method may be applied to the communication field. The method includes: receiving first indication information and first information; and determining, based on the first indication information, that the first information is coordination procedure information. The coordination procedure information is information used in a coordination procedure. The coordination procedure may include a trigger mechanism-based coordination procedure and a non-trigger mechanism-based coordination procedure. The coordination procedure information includes trigger information or coordination information, the trigger information triggers the coordination procedure, and the coordination information includes information about a coordination resource. The first information is indicated by using the first indication information, so that the first information can be identified, and the first information can be determined as the coordination procedure information based on the first indication information, to perform a coordination resource selection procedure. Signaling in a coordination resource selection process is indicated, so that a coordination resource selection mechanism is further improved, signaling identification complexity is reduced, and a coordination procedure is optimized.

## Description

### TECHNICAL FIELD

This application relates to the field of communication technologies, and in particular, to a communication method and a communication apparatus.

### BACKGROUND

A vehicle-to-everything (Vehicle-To-Everything, V2X) internet of vehicles (IoV) technology is proposed. V2X communication refers to communication between a vehicle and anything outside the vehicle, including vehicle to vehicle (Vehicle to Vehicle, V2V) communication, vehicle to pedestrian (Vehicle to Pedestrian, V2P) communication, vehicle to infrastructure (Vehicle to Infrastructure, V2I) communication, and vehicle to network (Vehicle to Network, V2N) communication. In an internet of vehicles system, when terminal devices communicate with each other, usually two resource allocation modes are used: One mode is that a network device schedules a sidelink transmission resource, and the other mode is that the terminal devices independently select resources. In the independent resource selection mode, a transmission resource of a transmitting terminal device does not depend on a base station. In the independent resource selection mode, the transmitting terminal and a coordination terminal need to coordinate with each other. However, currently, there is no effective solution. The terminal devices may need to repeatedly sense each other or start a related procedure, causing a waste of resources and unnecessary interference.

### SUMMARY

This application provides a communication method and a communication apparatus, to optimize a coordination procedure between terminal devices in an independent selection mode.

According to a first aspect, a communication method is provided. The method includes: receiving first indication information and first information; and determining, based on the first indication information, that the first information is coordination procedure information. The coordination procedure information is information used in a coordination procedure, and the coordination procedure is a procedure in which one sidelink device coordinates another sidelink device to select a resource. The coordination procedure may include a trigger mechanism-based coordination procedure and a non-trigger mechanism-based coordination procedure. The coordination procedure information includes trigger information or coordination information, the trigger information triggers the coordination procedure, and the coordination information includes information about a coordination resource.

In this embodiment of this application, the first information is indicated by using the first indication information, so that the first information can be identified, and the first information can be determined as the coordination procedure information based on the first indication information, to perform a coordination resource selection procedure. Signaling in a coordination resource selection process is indicated, so that a coordination resource selection mechanism is further improved, signaling identification complexity is reduced, and a coordination procedure is optimized.

In a possible implementation of the first aspect, a first sidelink device may receive the first indication information and the first information that are sent by a second sidelink device. In this case, the trigger information triggers the first sidelink device to coordinate the second sidelink device to select a resource. The information about the coordination resource is determined by the second sidelink device. The coordination resource is used by the second sidelink device to coordinate the first sidelink device to select a resource.

In this embodiment of this application, when the first information received by the first sidelink device is the trigger information, the first sidelink device may coordinate, based on the trigger information, the second sidelink device to select a resource. When the first information received by the first sidelink device is the coordination information, the first sidelink device may select a resource based on the coordination information. In this case, the second sidelink device coordinates the first sidelink device to select a resource. In this embodiment of this application, the first information is identified by using the first indication information, so that the first sidelink device may identify different coordination procedures, to complete corresponding coordination procedures.

In a possible implementation of the first aspect, the coordination information is trigger mechanism-based coordination information or non-trigger mechanism-based coordination information. The trigger mechanism means that in a process of performing a coordination procedure, a transmitting terminal device is required to send trigger information to a coordination terminal device, and a coordination terminal device sends coordination information based on the trigger information. In this case, the coordination information is referred to as the trigger mechanism-based coordination information. The non-trigger mechanism means that in a process of performing a coordination procedure, a coordination terminal device does not need to receive trigger information, and the coordination terminal device actively sends coordination information to a transmitting terminal device to coordinate the transmitting terminal device to select a resource. In this case, the coordination information is referred to as the non-trigger mechanism-based coordination information.

In this embodiment of this application, different coordination procedures can be further identified, so as to further improve a coordination resource selection mechanism and optimize the coordination procedure.

In a possible implementation of the first aspect, it can be determined, based on the first indication information, that the first information is the coordination procedure information. Further, it can be determined, based on the first indication information, whether the coordination procedure information is the trigger information or the coordination information. In this embodiment of this application, not only the coordination procedure can be identified by using the first indication information, but also an information type of the first information in the coordination procedure can be further identified. Therefore, signaling identification complexity is reduced.

In a possible implementation of the first aspect, sidelink control information may be received, where the sidelink control information includes 1^{st}-stage sidelink control information and 2^{nd}-stage sidelink control information. The first indication information may indicate that the 2^{nd}-stage sidelink control information is third-format sidelink control information, and the third-format sidelink control information may indicate that the first information is the trigger information. Alternatively, the first indication information may indicate that the 2^{nd}-stage sidelink control information is fourth-format sidelink control information, and the fourth-format sidelink information indicates that the first information is the coordination information.

In this embodiment of this application, the first indication information identifies the first information by indicating sidelink control information of different formats. When the first indication information indicates that the 2^{nd}-stage sidelink control information is the third-format sidelink control information, it can be learned that the first information is the trigger information. When the first indication information indicates that the 2^{nd}-stage sidelink control information is the fourth-format sidelink control information, it can be learned that the first information is the coordination information. Therefore, signaling identification complexity is reduced.

In a possible implementation of the first aspect, it is determined, based on the first indication information, that the coordination procedure information is the coordination information. In this case, second indication information may further be received, where the second indication information indicates that the coordination information is the trigger mechanism-based coordination information, or the second indication information indicates that the coordination information is the non-trigger mechanism-based coordination information.

In this embodiment of this application, when the first indication information indicates that the coordination procedure information is the coordination information, whether the coordination information is the trigger mechanism-based coordination information or the non-trigger mechanism-based coordination information may be further identified by using the second indication information. Therefore, it can be distinguished whether the coordination procedure in this case is a trigger mechanism-based coordination procedure or a non-trigger mechanism-based coordination procedure. In this way, the coordination resource selection mechanism is further improved.

In a possible implementation of the first aspect, the second indication information and the coordination information may be carried in same signaling. Sidelink control information may be received, where the sidelink control information includes 1^{st}-stage sidelink control information and 2^{nd}-stage sidelink control information. The 2^{nd}-stage sidelink control information may be fourth-format sidelink control information. The coordination information may be in the fourth-format sidelink control information. The second indication information, the same as the coordination information, may be in the fourth-format sidelink control information.

Alternatively, a part of the coordination information may be in the fourth-format sidelink control information, and the other part may be in the 1^{st}-stage sidelink control information. Alternatively, the second indication information may be in the fourth-format sidelink control information.

The second indication information may be carried in a field in the fourth-format sidelink control information.

The fourth-format sidelink control information may include a first field, and the first field indicates that the coordination information is in the fourth-format sidelink control information, or the first field indicates that the coordination information is in the fourth-format sidelink control information and the 1^{st}-stage sidelink control information.

In this embodiment of this application, the first indication information indicates that the 2^{nd}-stage sidelink control information is the fourth-format sidelink control information, and the fourth sidelink control information further indicates that the first information is the coordination information. Alternatively, the coordination information may be in the fourth-format sidelink control information, so that the coordination information can be decoded more quickly, and a location at which the coordination information is carried does not need to be additionally agreed on. Alternatively, a part of the coordination information may be in the fourth-format sidelink control information, and a part may be in the 1^{st}-stage sidelink control information. The two manners of carrying the coordination information may be indicated by using the first field in the fourth-format sidelink control information.

In a possible implementation of the first aspect, the first indication information indicates that the first information is the coordination procedure information. In this case, it can be learned, based on the first indication information, that the first information is the coordination information or the trigger information, but it cannot be learned, based on the first indication information, which one of the coordination information or the trigger information is the first information. Therefore, third indication information may be further received, where the third indication information indicates that the coordination procedure information is one of the trigger information, the trigger mechanism-based coordination information, or the non-trigger mechanism-based coordination information.

In this embodiment of this application, it can be learned, based on the first indication information, that the first information is the coordination procedure information, so as to identify the coordination procedure. Further, an information type of the first information in the coordination procedure may be identified by using the third indication information. The third indication information may indicate that the coordination procedure information is one of the trigger information, the trigger mechanism-based coordination information, or the non-trigger mechanism-based coordination information, so that not only the trigger information and the coordination information can be distinguished, but also whether the coordination information is based on a trigger mechanism or based on a non-trigger mechanism can be distinguished.

In a possible implementation of the first aspect, sidelink control information may be further received, where the sidelink control information includes 1^{st}-stage sidelink control information and 2^{nd}-stage sidelink control information. The first indication information may indicate that the 2^{nd}-stage sidelink control information is third-format sidelink control information, and the third-format sidelink control information may indicate that the first information is the coordination procedure information.

In this embodiment of this application, the first indication information may indicate a format of the sidelink control information, and the first information is determined as the coordination procedure information by identifying the format. An identification manner is simple, and signaling identification complexity is reduced.

In a possible implementation of the first aspect, sidelink control information may be further received, where the sidelink control information includes 1^{st}-stage sidelink control information and 2^{nd}-stage sidelink control information. The 2^{nd}-stage sidelink control information is third-format sidelink control information. The third indication information is carried in a field in the third-format sidelink control information. The field may be an identifier field in the third-format sidelink control information. When the identifier field has different values, the third indication information may separately indicate that the coordination procedure information is the trigger information, the trigger mechanism-based coordination information, or the non-trigger mechanism-based coordination information.

In a possible implementation of the first aspect, sidelink control information may be further received, where the sidelink control information includes 1^{st}-stage sidelink control information and 2^{nd}-stage sidelink control information. The 2^{nd}-stage sidelink control information is third-format sidelink control information. The coordination information may be carried in the third-format sidelink control information. Alternatively, a part of the coordination information may be carried in the third-format sidelink control information, and the other part may be carried in the 1^{st}-stage sidelink control information. The third-format sidelink control information may include a second field, and the second field indicates that the coordination information is in the third-format sidelink control information, or the second field indicates that the coordination information is in the third-format sidelink control information and the 1^{st}-stage sidelink control information.

In this embodiment of this application, the first indication information may indicate that the 2^{nd}-stage sidelink control information is the third-format sidelink control information, and the third-format sidelink control information may indicate that the first information is the coordination procedure information. Alternatively, the coordination information may be in the third-format sidelink control information, so that the coordination information can be decoded more quickly, and a location at which the coordination information is carried does not need to be additionally agreed on. Alternatively, a part of the coordination information may be in the third-format sidelink control information, and a part may be in the 1^{st}-stage sidelink control information. The two manners of carrying the coordination information may be indicated by using the second field in the third-format sidelink control information.

In a possible implementation of the first aspect, sidelink control information may be further received, where the sidelink control information includes 1^{st}-stage sidelink control information and 2^{nd}-stage sidelink control information. The first indication information is carried in a reserved field in the 1^{st}-stage sidelink control information or a 2^{nd}-stage sidelink control information format field in the 1^{st}-stage sidelink control information. When the reserved field or the 2^{nd}-stage sidelink control information format field has different values, the first indication information may indicate different content.

In this embodiment of this application, the reserved field or the 2^{nd}-stage sidelink control information format field is used to carry the first indication information. In addition, when the reserved field or the 2^{nd}-stage sidelink control information format field has different values, the first indication information may indicate different content. For unused fields in the sidelink control information, there is no need to define a new field, and an existing design and the reserved field of the 1^{st}-stage sidelink control information can be reused to a maximum extent.

In a possible implementation of the first aspect, sidelink control information may be further received, where the sidelink control information includes 1^{st}-stage sidelink control information and 2^{nd}-stage sidelink control information. The 2^{nd}-stage sidelink control information is third-format sidelink control information. The trigger information is in the third-format sidelink control information, or the trigger information is in the third-format sidelink control information and the 1^{st}-stage sidelink control information.

The third-format sidelink control information may include a third field, and the third field indicates that the trigger information is in the third-format sidelink control information, or the third field indicates that the trigger information is in the third-format sidelink control information or the 1^{st}-stage sidelink control information.

In this embodiment of this application, the trigger information carried in the third-format sidelink control information can be decoded more quickly, and a location at which the trigger information is carried does not need to be additionally agreed on.

In a possible implementation of the first aspect, the trigger information includes a parameter of the coordination procedure, and the parameter of the coordination procedure includes at least one of the following information: a number of subchannels, a selection window size, a sensing window size, a period, or priority information. The number of subchannels includes a number of subchannels used for PSCCH/PSCCH transmission, the selection window size includes a length and a start position of a resource selection window, and the sensing window size includes a length and a start position of a resource sensing window.

In a possible implementation of the first aspect, the non-trigger mechanism-based coordination information includes the information about the coordination resource and a parameter of the coordination procedure, and the parameter of the coordination procedure includes at least one of the following information: a number of subchannels, a selection window size, a sensing window size, a period, or priority information. The number of subchannels includes a number of subchannels used for PSCCH/PSCCH transmission, the selection window size includes a length and a start position of a resource selection window, and the sensing window size includes a length and a start position of a resource sensing window.

According to a second aspect, a communication method is provided. The communication method includes: receiving sidelink control information; determining that the sidelink control information is second-format sidelink control information; and determining, based on the second-format sidelink control information, that the sidelink control information includes coordination procedure information, where the coordination procedure information is information used in a coordination procedure. The coordination procedure is a procedure in which one sidelink device coordinates another sidelink device to select a resource. The coordination procedure may include a trigger mechanism-based coordination procedure and a non-trigger mechanism-based coordination procedure. The coordination procedure information includes trigger information or coordination information. The trigger information triggers the coordination procedure, and the coordination information includes information about a coordination resource.

In this embodiment of this application, new-format sidelink control information is set, and when the second-format sidelink control information is detected, it can be determined that the sidelink control information includes the coordination procedure information. It can be indicated that 1^{st}-stage sidelink control information includes the coordination procedure information without using the indication information, so that signaling overheads are reduced.

In a possible implementation of the second aspect, the sidelink control information includes 1^{st}-stage sidelink control information and 2^{nd}-stage sidelink control information. The determining that the sidelink control information is second-format sidelink control information includes: determining that the 1^{st}-stage sidelink control information is the second-format sidelink control information.

In this embodiment of this application, when the sidelink control information includes the 1^{st}-stage sidelink control information and the 2^{nd}-stage sidelink control information, only the 1^{st}-stage sidelink control information may be set to the second-format sidelink control information, to indicate the coordination procedure information. The 2^{nd}-stage sidelink control information does not need to be modified.

In a possible implementation of the second aspect, the first sidelink device may receive the sidelink control information sent by the second sidelink device. In this case, the trigger information triggers the first sidelink device to coordinate the second sidelink device to select a resource. The information about the coordination resource is determined by the second sidelink device. The coordination resource is used by the second sidelink device to coordinate the first sidelink device to select a resource.

In this embodiment of this application, when the coordination procedure information is the trigger information, the first sidelink device may coordinate, based on the trigger information, the second sidelink device to select a resource. When the coordination procedure information is the coordination information, the first sidelink device may select a resource based on the coordination information. In this case, the second sidelink device coordinates the first sidelink device to select a resource. In this embodiment of this application, whether the sidelink control information includes the coordination procedure information is identified by using the second-format sidelink control information, so that the first sidelink device can identify different coordination procedures, to complete the corresponding coordination procedures.

In a possible implementation of the second aspect, the coordination information is trigger mechanism-based coordination information or non-trigger mechanism-based coordination information. The trigger mechanism means that in a process of performing a coordination procedure, a transmitting terminal device is required to send trigger information to a coordination terminal device, and a coordination terminal device sends coordination information based on the trigger information. In this case, the coordination information is referred to as the trigger mechanism-based coordination information. The non-trigger mechanism means that in a process of performing a coordination procedure, a coordination terminal device does not need to receive trigger information, and the coordination terminal device actively sends coordination information to a transmitting terminal device to coordinate the transmitting terminal device to select a resource. In this case, the coordination information is referred to as the non-trigger mechanism-based coordination information.

In this embodiment of this application, different coordination procedures can be further identified, so as to further improve a coordination resource selection mechanism and optimize the coordination procedure.

In a possible implementation of the second aspect, the second-format sidelink control information includes a first field, and the first field is used to determine that the coordination procedure information is one of the trigger information, the trigger mechanism-based coordination information, or the non-trigger mechanism-based coordination information.

In this embodiment of this application, it can be learned, based on the second-format sidelink control information, that the first information is the coordination procedure information, so as to identify the coordination procedure. Further, an information type of the first information in the coordination procedure may be identified by using the first field in the second-format sidelink control information. The first field may indicate that the coordination procedure information is one of the trigger information, the trigger mechanism-based coordination information, or the non-trigger mechanism-based coordination information, so that not only the trigger information and the coordination information can be distinguished, but also whether the coordination information is based on a trigger mechanism or based on a non-trigger mechanism can be distinguished.

In a possible implementation of the second aspect, the trigger information includes a parameter of the coordination procedure, and the parameter of the coordination procedure includes at least one of the following information: a number of subchannels, a selection window size, a sensing window size, a period, or priority information. The number of subchannels includes a number of subchannels used for PSCCH/PSCCH transmission, the selection window size includes a length and a start position of a resource selection window, and the sensing window size includes a length and a start position of a resource sensing window.

In a possible implementation of the second aspect, the non-trigger mechanism-based coordination information includes the information about the coordination resource and a parameter of the coordination procedure, and the parameter of the coordination procedure includes at least one of the following information: a number of subchannels, a selection window size, a sensing window size, a period, or priority information. The number of subchannels includes a number of subchannels used for PSCCH/PSCCH transmission, the selection window size includes a length and a start position of a resource selection window, and the sensing window size includes a length and a start position of a resource sensing window.

According to a third aspect, a communication method is provided. The method includes: determining first indication information and first information: and sending the first indication information and the first information. The first indication information is used to determine that the first information is the coordination procedure information. The coordination procedure information is information used in a coordination procedure, and the coordination procedure is a procedure in which one sidelink device coordinates another sidelink device to select a resource. The coordination procedure may include a trigger mechanism-based coordination procedure and a non-trigger mechanism-based coordination procedure. The coordination procedure information includes trigger information or coordination information, the trigger information triggers the coordination procedure, and the coordination information includes information about a coordination resource.

In this embodiment of this application, the first information is indicated by using the first indication information, so that the first information can be identified, and the first information can be determined as the coordination procedure information based on the first indication information, to perform a coordination resource selection procedure. Signaling in a coordination resource selection process is indicated, so that a coordination resource selection mechanism is further improved, signaling identification complexity is reduced, and a coordination procedure is optimized.

In a possible implementation of the third aspect, a second sidelink device may send the first indication information and the first information to a first sidelink device. In this case, the trigger information triggers the first sidelink device to coordinate the second sidelink device to select a resource. The information about the coordination resource is determined by the second sidelink device. The coordination resource is used by the second sidelink device to coordinate the first sidelink device to select a resource.

In this embodiment of this application, when the first information sent by the second sidelink device is the trigger information, the trigger information may be used by the first sidelink device to coordinate the second sidelink device to select a resource. When the first information sent by the second sidelink device is the coordination information, the coordination information may be used to coordinate the first sidelink device to select a resource. In this case, the second sidelink device coordinates the first sidelink device to select a resource. In this embodiment of this application, the first information is identified by using the first indication information, so that different coordination procedures may be identified, to complete corresponding coordination procedures.

In a possible implementation of the third aspect, the coordination information is trigger mechanism-based coordination information or non-trigger mechanism-based coordination information. The trigger mechanism means that in a process of performing a coordination procedure, a transmitting terminal device is required to send trigger information to a coordination terminal device, and a coordination terminal device sends coordination information based on the trigger information. In this case, the coordination information is referred to as the trigger mechanism-based coordination information. The non-trigger mechanism means that in a process of performing a coordination procedure, a coordination terminal device does not need to receive trigger information, and the coordination terminal device actively sends coordination information to a transmitting terminal device to coordinate the transmitting terminal device to select a resource. In this case, the coordination information is referred to as the non-trigger mechanism-based coordination information.

In this embodiment of this application, different coordination procedures can be further identified, so as to further improve a coordination resource selection mechanism and optimize the coordination procedure.

In a possible implementation of the third aspect, the first indication information may be used to determine that the first information is the coordination procedure information, and the first indication information may be further used to determine whether the coordination procedure information is the trigger information or the coordination information. In this embodiment of this application, not only the coordination procedure can be identified by using the first indication information, but also an information type of the first information in the coordination procedure can be further identified. Therefore, signaling identification complexity is reduced.

In a possible implementation of the third aspect, sidelink control information may be sent, where the sidelink control information includes 1^{st}-stage sidelink control information and 2^{nd}-stage sidelink control information. The first indication information may indicate that the 2^{nd}-stage sidelink control information is third-format sidelink control information, and the third-format sidelink control information may indicate that the first information is the trigger information. Alternatively, the first indication information may indicate that the 2^{nd}-stage sidelink control information is fourth-format sidelink control information, and the fourth-format sidelink information indicates that the first information is the coordination information.

In this embodiment of this application, the first indication information identifies the first information by indicating sidelink control information of different formats. When the first indication information indicates that the 2^{nd}-stage sidelink control information is the third-format sidelink control information, it can be learned that the first information is the trigger information in this case. When the first indication information indicates that the 2^{nd}-stage sidelink control information is the fourth-format sidelink control information, it can be learned that the first information is the coordination information in this case. Therefore, signaling identification complexity is reduced.

In a possible implementation of the third aspect, the first indication information is used to determine that the coordination procedure information is the coordination information. In this case, second indication information may further be sent, where the second indication information indicates that the coordination information is the trigger mechanism-based coordination information, or the second indication information indicates that the coordination information is the non-trigger mechanism-based coordination information.

In this embodiment of this application, when the first indication information indicates that the coordination procedure information is the coordination information, whether the coordination information is the trigger mechanism-based coordination information or the non-trigger mechanism-based coordination information may be further identified by using the second indication information. Therefore, it can be distinguished whether the coordination procedure in this case is a trigger mechanism-based coordination procedure or a non-trigger mechanism-based coordination procedure. In this way, the coordination resource selection mechanism is further improved.

In a possible implementation of the third aspect, the second indication information and the coordination information may be carried in same signaling. Sidelink control information may be sent, where the sidelink control information includes 1^{st}-stage sidelink control information and 2^{nd}-stage sidelink control information. The 2^{nd}-stage sidelink control information may be fourth-format sidelink control information. The coordination information may be in the fourth-format sidelink control information. The second indication information, the same as the coordination information, may be in the fourth-format sidelink control information.

Alternatively, a part of the coordination information may be in the fourth-format sidelink control information, and the other part may be in the 1^{st}-stage sidelink control information. Alternatively, the second indication information may be in the fourth-format sidelink control information.

The second indication information may be carried in a field in the fourth-format sidelink control information.

The fourth-format sidelink control information may include a first field, and the first field indicates that the coordination information is in the fourth-format sidelink control information, or the first field indicates that the coordination information is in the fourth-format sidelink control information and the 1^{st}-stage sidelink control information.

In this embodiment of this application, the first indication information indicates that the 2^{nd}-stage sidelink control information is the fourth-format sidelink control information, and the fourth sidelink control information further indicates that the first information is the coordination information. Alternatively, the coordination information may be in the fourth-format sidelink control information, so that the coordination information can be decoded more quickly, and a location at which the coordination information is carried does not need to be additionally agreed on. Alternatively, a part of the coordination information may be in the fourth-format sidelink control information, and a part may be in the 1^{st}-stage sidelink control information. The two manners of carrying the coordination information may be indicated by using the first field in the fourth-format sidelink control information.

In a possible implementation of the third aspect, the first indication information indicates that the first information is the coordination procedure information. In this case, the first indication information may indicate that the first information is the coordination information or the trigger information, but the first indication information cannot indicate which one of the coordination information or the trigger information is the first information. Therefore, third indication information may be further sent, where the third indication information indicates that the coordination procedure information is one of the trigger information, the trigger mechanism-based coordination information, or the non-trigger mechanism-based coordination information.

In this embodiment of this application, the first indication information may indicate that the first information is the coordination procedure information, so as to identify the coordination procedure. Further, an information type of the first information in the coordination procedure may be identified by using the third indication information. The third indication information may indicate that the coordination procedure information is one of the trigger information, the trigger mechanism-based coordination information, or the non-trigger mechanism-based coordination information, so that not only the trigger information and the coordination information can be distinguished, but also whether the coordination information is based on a trigger mechanism or based on a non-trigger mechanism can be distinguished.

In a possible implementation of the third aspect, sidelink control information may be further sent, where the sidelink control information includes 1^{st}-stage sidelink control information and 2^{nd}-stage sidelink control information. The first indication information may indicate that the 2^{nd}-stage sidelink control information is third-format sidelink control information, and the third-format sidelink control information may indicate that the first information is the coordination procedure information.

In this embodiment of this application, the first indication information may indicate a format of the sidelink control information, and the first information is determined as the coordination procedure information by identifying the format. An identification manner is simple, and signaling identification complexity is reduced.

In a possible implementation of the third aspect, sidelink control information may be further sent, where the sidelink control information includes 1^{st}-stage sidelink control information and 2^{nd}-stage sidelink control information. The 2^{nd}-stage sidelink control information is third-format sidelink control information. The third indication information is carried in a field in the third-format sidelink control information. The field may be an identifier field in the third-format sidelink control information. When the identifier field has different values, the third indication information may separately indicate that the coordination procedure information is the trigger information, the trigger mechanism-based coordination information, or the non-trigger mechanism-based coordination information.

In a possible implementation of the third aspect, sidelink control information may be further sent, where the sidelink control information includes 1^{st}-stage sidelink control information and 2^{nd}-stage sidelink control information. The 2^{nd}-stage sidelink control information is third-format sidelink control information. The coordination information may be carried in the third-format sidelink control information. Alternatively, a part of the coordination information may be carried in the third-format sidelink control information, and the other part may be carried in the 1^{st}-stage sidelink control information. The third-format sidelink control information may include a second field, and the second field indicates that the coordination information is in the third-format sidelink control information, or the second field indicates that the coordination information is in the third-format sidelink control information and the 1^{st}-stage sidelink control information.

In this embodiment of this application, the first indication information may indicate that the 2^{nd}-stage sidelink control information is the third-format sidelink control information, and the third-format sidelink control information may indicate that the first information is the coordination procedure information. Alternatively, the coordination information may be in the third-format sidelink control information, so that the coordination information can be decoded more quickly, and a location at which the coordination information is carried does not need to be additionally agreed on. Alternatively, a part of the coordination information may be in the third-format sidelink control information, and a part may be in the 1^{st}-stage sidelink control information. The two manners of carrying the coordination information may be indicated by using the second field in the third-format sidelink control information.

In a possible implementation of the third aspect, sidelink control information may be further sent, where the sidelink control information includes 1^{st}-stage sidelink control information and 2^{nd}-stage sidelink control information. The first indication information is carried in a reserved field in the 1^{st}-stage sidelink control information or a 2^{nd}-stage sidelink control information format field in the 1^{st}-stage side link control information. When the reserved field or the 2^{nd}-stage sidelink control information format field has different values, the first indication information may indicate different content.

In this embodiment of this application, the reserved field or the 2^{nd}-stage sidelink control information format field is used to carry the first indication information. In addition, when the reserved field or the 2^{nd}-stage sidelink control information format field has different values, the first indication information may indicate different content. For unused fields in the sidelink control information, there is no need to define a new field, and an existing design and the reserved field of the 1^{st}-stage sidelink control information can be reused to a maximum extent.

In a possible implementation of the third aspect, sidelink control information may be further sent, where the sidelink control information includes 1^{st}-stage sidelink control information and 2^{nd}-stage sidelink control information. The 2^{nd}-stage sidelink control information is third-format sidelink control information. The trigger information is in the third-format sidelink control information, or the trigger information is in the third-format sidelink control information and the 1^{st}-stage sidelink control information.

The third-format sidelink control information may include a third field, and the third field indicates that the trigger information is in the third-format sidelink control information, or the third field indicates that the trigger information is in the third-format sidelink control information or the 1^{st}-stage sidelink control information.

In this embodiment of this application, the trigger information carried in the third-format sidelink control information can be decoded more quickly, and a location at which the trigger information is carried does not need to be additionally agreed on.

In a possible implementation of the third aspect, the trigger information includes a parameter of the coordination procedure, and the parameter of the coordination procedure includes at least one of the following information: a number of subchannels, a selection window size, a sensing window size, a period, or priority information. The number of subchannels includes a number of subchannels used for PSCCH/PSCCH transmission, the selection window size includes a length and a start position of a resource selection window, and the sensing window size includes a length and a start position of a resource sensing window.

In a possible implementation of the third aspect, the non-trigger mechanism-based coordination information includes the information about the coordination resource and a parameter of the coordination procedure, and the parameter of the coordination procedure includes at least one of the following information: a number of subchannels, a selection window size, a sensing window size, a period, or priority information. The number of subchannels includes a number of subchannels used for PSCCH/PSCCH transmission, the selection window size includes a length and a start position of a resource selection window, and the sensing window size includes a length and a start position of a resource sensing window.

According to a fourth aspect, a communication method is provided. The communication method includes: determining sidelink control information, and sending the sidelink control information. The sidelink control information is second-format sidelink control information. The second-format sidelink control information indicates that the sidelink control information includes coordination procedure information, and the coordination procedure information is information used in a coordination procedure. The coordination procedure is a procedure in which one sidelink device coordinates another sidelink device to select a resource. The coordination procedure may include a trigger mechanism-based coordination procedure and a non-trigger mechanism-based coordination procedure. The coordination procedure information includes trigger information or coordination information. The trigger information triggers the coordination procedure, and the coordination information includes information about a coordination resource.

In this embodiment of this application, new-format sidelink control information is set. The sidelink control information is the second-format sidelink control information, and the second-format sidelink control information can indicate that the sidelink control information includes the coordination procedure information. It can be indicated, without using the indication information, that the sidelink control information includes the coordination procedure information, so that signaling overheads are reduced.

In a possible implementation of the fourth aspect, the sidelink control information includes 1^{st}-stage sidelink control information and 2^{nd}-stage sidelink control information. The determining that the sidelink control information is second-format sidelink control information includes: determining that the 1^{st}-stage sidelink control information is the second-format sidelink control information.

In this embodiment of this application, when the sidelink control information includes the 1^{st}-stage sidelink control information and the 2^{nd}-stage sidelink control information, only the 1^{st}-stage sidelink control information may be set to the second-format sidelink control information, to indicate the coordination procedure information. The 2^{nd}-stage sidelink control information does not need to be modified.

In a possible implementation of the fourth aspect, a second sidelink device may send the sidelink control information to a first sidelink device. In this case, the trigger information triggers the first sidelink device to coordinate the second sidelink device to select a resource. The information about the coordination resource is determined by the second sidelink device. The coordination resource is used by the second sidelink device to coordinate the first sidelink device to select a resource.

In this embodiment of this application, when the coordination procedure information is the trigger information, the first sidelink device may coordinate, based on the trigger information, the second sidelink device to select a resource. When the coordination procedure information is the coordination information, the coordination information may be used to coordinate the first sidelink device to select a resource. In this case, the second sidelink device coordinates the first sidelink device to select a resource. In this embodiment of this application, whether the sidelink control information includes the coordination procedure information is identified by using the second-format sidelink control information.

In a possible implementation of the fourth aspect, the coordination information is trigger mechanism-based coordination information or non-trigger mechanism-based coordination information. The trigger mechanism means that in a process of performing a coordination procedure, a transmitting terminal device is required to send trigger information to a coordination terminal device, and a coordination terminal device sends coordination information based on the trigger information. In this case, the coordination information is referred to as the trigger mechanism-based coordination information. The non-trigger mechanism means that in a process of performing a coordination procedure, a coordination terminal device does not need to receive trigger information, and the coordination terminal device actively sends coordination information to a transmitting terminal device to coordinate the transmitting terminal device to select a resource. In this case, the coordination information is referred to as the non-trigger mechanism-based coordination information.

In this embodiment of this application, different coordination procedures can be further identified, so as to further improve a coordination resource selection mechanism and optimize the coordination procedure.

In a possible implementation of the fourth aspect, the second-format sidelink control information includes a first field, and the first field is used to determine that the coordination procedure information is one of the trigger information, the trigger mechanism-based coordination information, or the non-trigger mechanism-based coordination information.

In this embodiment of this application, it can be learned, based on the second-format sidelink control information, that the first information is the coordination procedure information, so as to identify the coordination procedure. Further, an information type of the first information in the coordination procedure may be identified by using the first field in the second-format sidelink control information. The first field may indicate that the coordination procedure information is one of the trigger information, the trigger mechanism-based coordination information, or the non-trigger mechanism-based coordination information, so that not only the trigger information and the coordination information can be distinguished, but also whether the coordination information is based on a trigger mechanism or based on a non-trigger mechanism can be distinguished.

In a possible implementation of the fourth aspect, the trigger information includes a parameter of the coordination procedure, and the parameter of the coordination procedure includes at least one of the following information: a number of subchannels, a selection window size, a sensing window size, a period, or priority information. The number of subchannels includes a number of subchannels used for PSCCH/PSCCH transmission, the selection window size includes a length and a start position of a resource selection window, and the sensing window size includes a length and a start position of a resource sensing window.

In a possible implementation of the fourth aspect, the non-trigger mechanism-based coordination information includes the information about the coordination resource and a parameter of the coordination procedure, and the parameter of the coordination procedure includes at least one of the following information: a number of subchannels, a selection window size, a sensing window size, a period, or priority information. The number of subchannels includes a number of subchannels used for PSCCH/PSCCH transmission, the selection window size includes a length and a start position of a resource selection window, and the sensing window size includes a length and a start position of a resource sensing window.

According to a fifth aspect, a communication apparatus is provided. The communication apparatus includes a transceiver module, configured to receive first indication information and first information; and a processing module, configured to determine, based on the first indication information, that the first information is coordination procedure information. The coordination procedure information is information used in a coordination procedure, and the coordination procedure is a procedure in which one sidelink device coordinates another sidelink device to select a resource. The coordination procedure may include a trigger mechanism-based coordination procedure and a non-trigger mechanism-based coordination procedure. The coordination procedure information includes trigger information or coordination information, the trigger information triggers the coordination procedure, and the coordination information includes information about a coordination resource.

In this embodiment of this application, the first information is indicated by using the first indication information, so that the first information can be identified, and the first information can be determined as the coordination procedure information based on the first indication information, to perform a coordination resource selection procedure. Signaling in a coordination resource selection process is indicated, so that a coordination resource selection mechanism is further improved, signaling identification complexity is reduced, and a coordination procedure is optimized.

In a possible implementation of the fifth aspect, a transceiver module of a first sidelink device may receive the first indication information and the first information that are sent by a second sidelink device. In this case, the trigger information triggers the first sidelink device to coordinate the second sidelink device to select a resource. The information about the coordination resource is determined by the second sidelink device. The coordination resource is used by the second sidelink device to coordinate the first sidelink device to select a resource.

In this embodiment of this application, when the first information received by the transceiver module of the first sidelink device is the trigger information, the first sidelink device may coordinate, based on the trigger information, the second sidelink device to select a resource. When the first information received by the first sidelink device is the coordination information, the first sidelink device may select a resource based on the coordination information. In this case, the second sidelink device coordinates the first sidelink device to select a resource. In this embodiment of this application, the first information is identified by using the first indication information, so that the first sidelink device may identify different coordination procedures, to complete corresponding coordination procedures.

In a possible implementation of the fifth aspect, the coordination information is trigger mechanism-based coordination information or non-trigger mechanism-based coordination information. The trigger mechanism means that in a process of performing a coordination procedure, a transmitting terminal device is required to send trigger information to a coordination terminal device, and a coordination terminal device sends coordination information based on the trigger information. In this case, the coordination information is referred to as the trigger mechanism-based coordination information. The non-trigger mechanism means that in a process of performing a coordination procedure, a coordination terminal device does not need to receive trigger information, and the coordination terminal device actively sends coordination information to a transmitting terminal device to coordinate the transmitting terminal device to select a resource. In this case, the coordination information is referred to as the non-trigger mechanism-based coordination information.

In this embodiment of this application, different coordination procedures can be further identified, so as to further improve a coordination resource selection mechanism and optimize the coordination procedure.

In a possible implementation of the fifth aspect, the processing module is configured to determine, based on the first indication information, that the first information is the coordination procedure information. Further, the processing module may be further configured to determine, based on the first indication information, whether the coordination procedure information is the trigger information or the coordination information. In this embodiment of this application, not only the coordination procedure can be identified by using the first indication information, but also an information type of the first information in the coordination procedure can be further identified. Therefore, signaling identification complexity is reduced.

In a possible implementation of the fifth aspect, the transceiver module may be configured to receive sidelink control information, where the sidelink control information includes 1^{st}-stage sidelink control information and 2^{nd}-stage sidelink control information. The first indication information may indicate that the 2^{nd}-stage sidelink control information is third-format sidelink control information, and the third-format sidelink control information may indicate that the first information is the trigger information. Alternatively, the first indication information may indicate that the 2^{nd}-stage sidelink control information is fourth-format sidelink control information, and the fourth-format sidelink information indicates that the first information is the coordination information.

In this embodiment of this application, the first indication information identifies the first information by indicating sidelink control information of different formats. When the first indication information indicates that the 2^{nd}-stage sidelink control information is third-format sidelink control information, it can be learned that the first information is the trigger information in this case. When the first indication information indicates that the 2^{nd}-stage sidelink control information is the fourth-format sidelink control information, it can be learned that the first information is the coordination information in this case. Therefore, signaling identification complexity is reduced.

In a possible implementation of the fifth aspect, the processing module may be configured to determine, based on the first indication information, that the coordination procedure information is the coordination information. In this case, the transceiver module may be further configured to receive second indication information, where the second indication information indicates that the coordination information is the trigger mechanism-based coordination information, or the second indication information indicates that the coordination information is the non-trigger mechanism-based coordination information.

In this embodiment of this application, when the first indication information indicates that the coordination procedure information is the coordination information, whether the coordination information is the trigger mechanism-based coordination information or the non-trigger mechanism-based coordination information may be further identified by using the second indication information. Therefore, it can be distinguished whether the coordination procedure in this case is a trigger mechanism-based coordination procedure or a non-trigger mechanism-based coordination procedure. In this way, the coordination resource selection mechanism is further improved.

In a possible implementation of the fifth aspect, the second indication information and the coordination information may be carried in same signaling. Sidelink control information may be received, where the sidelink control information includes 1^{st}-stage sidelink control information and 2^{nd}-stage sidelink control information. The 2^{nd}-stage sidelink control information may be fourth-format sidelink control information. The coordination information may be in the fourth-format sidelink control information. The second indication information, the same as the coordination information, may be in the fourth-format sidelink control information.

Alternatively, a part of the coordination information may be in the fourth-format sidelink control information, and the other part may be in the 1^{st}-stage sidelink control information. Alternatively, the second indication information may be in the fourth-format sidelink control information.

The second indication information may be carried in a field in the fourth-format sidelink control information.

The fourth-format sidelink control information may include a first field, and the first field indicates that the coordination information is in the fourth-format sidelink control information, or the first field indicates that the coordination information is in the fourth-format sidelink control information and the 1^{st}-stage sidelink control information.

In this embodiment of this application, the first indication information indicates that the 2^{nd}-stage sidelink control information is fourth-format sidelink control information, and the fourth sidelink control information further indicates that the first information is the coordination information. Alternatively, the coordination information may be in the fourth-format sidelink control information, so that the coordination information can be decoded more quickly, and a location at which the coordination information is carried does not need to be additionally agreed on. Alternatively, a part of the coordination information may be in the fourth-format sidelink control information, and a part may be in the 1^{st}-stage sidelink control information. The two manners of carrying the coordination information may be indicated by using the first field in the fourth-format sidelink control information.

In a possible implementation of the fifth aspect, the first indication information indicates that the first information is the coordination procedure information. In this case, the processing module may be configured to learn, based on the first indication information, that the first information is the coordination information or the trigger information, but cannot learn which one of the coordination information or the trigger information is the first information. Therefore, the transceiver module may be further configured to receive third indication information, where the third indication information indicates that the coordination procedure information is one of the trigger information, the trigger mechanism-based coordination information, or the non-trigger mechanism-based coordination information.

In this embodiment of this application, it can be learned, based on the first indication information, that the first information is the coordination procedure information, so as to identify the coordination procedure. Further, an information type of the first information in the coordination procedure may be identified by using the third indication information. The third indication information may indicate that the coordination procedure information is one of the trigger information, the trigger mechanism-based coordination information, or the non-trigger mechanism-based coordination information, so that not only the trigger information and the coordination information can be distinguished, but also whether the coordination information is based on a trigger mechanism or based on a non-trigger mechanism can be distinguished.

In a possible implementation of the fifth aspect, the transceiver module may be further configured to receive sidelink control information, where the sidelink control information includes 1^{st}-stage sidelink control information and 2^{nd}-stage sidelink control information. The first indication information may indicate that the 2^{nd}-stage sidelink control information is third-format sidelink control information, and the third-format sidelink control information may indicate that the first information is the coordination procedure information.

In this embodiment of this application, the first indication information may indicate a format of the sidelink control information, and the first information is determined as the coordination procedure information by identifying the format. An identification manner is simple, and signaling identification complexity is reduced.

In a possible implementation of the fifth aspect, the transceiver module may be further configured to receive sidelink control information, where the sidelink control information includes 1^{st}-stage sidelink control information and 2^{nd}-stage sidelink control information. The 2^{nd}-stage sidelink control information is third-format sidelink control information. The third indication information is carried in a field in the third-format sidelink control information. The field may be an identifier field in the third-format sidelink control information. When the identifier field has different values, the third indication information may separately indicate that the coordination procedure information is the trigger information, the trigger mechanism-based coordination information, or the non-trigger mechanism-based coordination information.

In a possible implementation of the fifth aspect, the transceiver module may be further configured to receive sidelink control information, where the sidelink control information includes 1^{st}-stage sidelink control information and 2^{nd}-stage sidelink control information. The 2^{nd}-stage sidelink control information is third-format sidelink control information. The coordination information may be carried in the third-format sidelink control information. Alternatively, a part of the coordination information may be carried in the third-format sidelink control information, and the other part may be carried in the 1^{st}-stage sidelink control information. The third-format sidelink control information may include a second field, and the second field indicates that the coordination information is in the third-format sidelink control information, or the second field indicates that the coordination information is in the third-format sidelink control information and the 1^{st}-stage sidelink control information.

In this embodiment of this application, the first indication information may indicate that the 2^{nd}-stage sidelink control information is the third-format sidelink control information, and the third-format sidelink control information may indicate that the first information is the coordination procedure information. Alternatively, the coordination information may be in the third-format sidelink control information, so that the coordination information can be decoded more quickly, and a location at which the coordination information is carried does not need to be additionally agreed on. Alternatively, a part of the coordination information may be in the third-format sidelink control information, and a part may be in the 1^{st}-stage sidelink control information. The two manners of carrying the coordination information may be indicated by using the second field in the third-format sidelink control information.

In a possible implementation of the fifth aspect, the transceiver module may be further configured to receive sidelink control information, where the sidelink control information includes 1^{st}-stage sidelink control information and 2^{nd}-stage sidelink control information. The first indication information is carried in a reserved field in the 1^{st}-stage sidelink control information or a 2^{nd}-stage sidelink control information format field in the 1^{st}-stage sidelink control information. When the reserved field or the 2^{nd}-stage sidelink control information format field has different values, the first indication information may indicate different content.

In this embodiment of this application, the reserved field or the 2^{nd}-stage sidelink control information format field is used to carry the first indication information. In addition, when the reserved field or the 2^{nd}-stage sidelink control information format field has different values, the first indication information may indicate different content. For unused fields in the sidelink control information, there is no need to define a new field, and an existing design and the reserved field of the 1^{st}-stage sidelink control information can be reused to a maximum extent.

In a possible implementation of the fifth aspect, the transceiver module may be further configured to receive sidelink control information, where the sidelink control information includes 1^{st}-stage sidelink control information and 2^{nd}-stage sidelink control information. The 2^{nd}-stage sidelink control information is third-format sidelink control information. The trigger information is in the third-format sidelink control information, or the trigger information is in the third-format sidelink control information and the 1^{st}-stage sidelink control information.

The third-format sidelink control information may include a third field, and the third field indicates that the trigger information is in the third-format sidelink control information, or the third field indicates that the trigger information is in the third-format sidelink control information or the 1^{st}-stage sidelink control information.

In this embodiment of this application, the trigger information carried in the third-format sidelink control information can be decoded more quickly, and a location at which the trigger information is carried does not need to be additionally agreed on.

In a possible implementation of the fifth aspect, the trigger information includes a parameter of the coordination procedure, and the parameter of the coordination procedure includes at least one of the following information: a number of subchannels, a selection window size, a sensing window size, a period, or priority information. The number of subchannels includes a number of subchannels used for PSCCH/PSCCH transmission, the selection window size includes a length and a start position of a resource selection window, and the sensing window size includes a length and a start position of a resource sensing window.

In a possible implementation of the fifth aspect, the non-trigger mechanism-based coordination information includes the information about the coordination resource and a parameter of the coordination procedure, and the parameter of the coordination procedure includes at least one of the following information: a number of subchannels, a selection window size, a sensing window size, a period, or priority information. The number of subchannels includes a number of subchannels used for PSCCH/PSCCH transmission, the selection window size includes a length and a start position of a resource selection window, and the sensing window size includes a length and a start position of a resource sensing window.

According to a sixth aspect, a communication apparatus is provided. The communication apparatus includes a transceiver module, configured to receive sidelink control information: and a processing module, configured to determine that the sidelink control information is second-format sidelink control information. The processing module is further configured to determine, based on the second-format sidelink control information, that the sidelink control information includes coordination procedure information, where the coordination procedure information is information used in a coordination procedure. The coordination procedure is a procedure in which one sidelink device coordinates another sidelink device to select a resource. The coordination procedure may include a trigger mechanism-based coordination procedure and a non-trigger mechanism-based coordination procedure. The coordination procedure information includes trigger information or coordination information. The trigger information triggers the coordination procedure, and the coordination information includes information about a coordination resource.

According to the communication apparatus in this embodiment of this application, new-format sidelink control information is set, and when the second-format sidelink control information is detected, it can be determined that the sidelink control information includes the coordination procedure information. It can be indicated, without using the indication information, that the sidelink control information includes the coordination procedure information, so that signaling overheads are reduced.

In a possible implementation of the sixth aspect, the sidelink control information includes 1^{st}-stage sidelink control information and 2^{nd}-stage sidelink control information. The determining that the sidelink control information is second-format sidelink control information includes: determining that the 1^{st}-stage sidelink control information is the second-format sidelink control information.

In this embodiment of this application, when the sidelink control information includes the 1^{st}-stage sidelink control information and the 2^{nd}-stage sidelink control information, only the 1^{st}-stage sidelink control information may be set to the second-format sidelink control information, to indicate the coordination procedure information. The 2^{nd}-stage sidelink control information does not need to be modified.

In a possible implementation of the sixth aspect, the transceiver module of a first sidelink device may receive the sidelink control information sent by a second sidelink device. In this case, the trigger information triggers the first sidelink device to coordinate the second sidelink device to select a resource. The information about the coordination resource is determined by the second sidelink device. The coordination resource is used by the second sidelink device to coordinate the first sidelink device to select a resource.

In this embodiment of this application, when the coordination procedure information is the trigger information, the first sidelink device may coordinate, based on the trigger information, the second sidelink device to select a resource. When the coordination procedure information is the coordination information, the first sidelink device may select a resource based on the coordination information. In this case, the second sidelink device coordinates the first sidelink device to select a resource. In this embodiment of this application, whether the sidelink control information includes the coordination procedure information is identified by using the second-format sidelink control information, so that the first sidelink device can identify different coordination procedures, to complete the corresponding coordination procedures.

In a possible implementation of the sixth aspect, the coordination information is trigger mechanism-based coordination information or non-trigger mechanism-based coordination information. The trigger mechanism means that in a process of performing a coordination procedure, a transmitting terminal device is required to send trigger information to a coordination terminal device, and a coordination terminal device sends coordination information based on the trigger information. In this case, the coordination information is referred to as the trigger mechanism-based coordination information. The non-trigger mechanism means that in a process of performing a coordination procedure, a coordination terminal device does not need to receive trigger information, and the coordination terminal device actively sends coordination information to a transmitting terminal device to coordinate the transmitting terminal device to select a resource. In this case, the coordination information is referred to as the non-trigger mechanism-based coordination information.

In this embodiment of this application, different coordination procedures can be further identified, so as to further improve a coordination resource selection mechanism and optimize the coordination procedure.

In a possible implementation of the sixth aspect, the second-format sidelink control information includes a first field, and the first field is used to determine that the coordination procedure information is one of the trigger information, the trigger mechanism-based coordination information, or the non-trigger mechanism-based coordination information.

In this embodiment of this application, the processing module is configured to learn, based on the second-format sidelink control information, that the first information is the coordination procedure information, so as to identify the coordination procedure. Further, an information type of the first information in the coordination procedure may be identified by using the first field in the second-format sidelink control information. The first field may indicate that the coordination procedure information is one of the trigger information, the trigger mechanism-based coordination information, or the non-trigger mechanism-based coordination information, so that not only the trigger information and the coordination information can be distinguished, but also whether the coordination information is based on a trigger mechanism or based on a non-trigger mechanism can be distinguished.

In a possible implementation of the sixth aspect, the trigger information includes a parameter of the coordination procedure, and the parameter of the coordination procedure includes at least one of the following information: a number of subchannels, a selection window size, a sensing window size, a period, or priority information. The number of subchannels includes a number of subchannels used for PSCCH/PSCCH transmission, the selection window size includes a length and a start position of a resource selection window, and the sensing window size includes a length and a start position of a resource sensing window.

In a possible implementation of the sixth aspect, the non-trigger mechanism-based coordination information includes the information about the coordination resource and a parameter of the coordination procedure, and the parameter of the coordination procedure includes at least one of the following information: a number of subchannels, a selection window size, a sensing window size, a period, or priority information. The number of subchannels includes a number of subchannels used for PSCCH/PSCCH transmission, the selection window size includes a length and a start position of a resource selection window, and the sensing window size includes a length and a start position of a resource sensing window.

According to a seventh aspect, a communication apparatus is provided. The communication apparatus includes a processing module, configured to determine first indication information and first information; and a transceiver module, configured to send the first indication information and the first information. The first indication information is used to determine that the first information is the coordination procedure information. The coordination procedure information is information used in a coordination procedure, and the coordination procedure is a procedure in which one sidelink device coordinates another sidelink device to select a resource. The coordination procedure may include a trigger mechanism-based coordination procedure and a non-trigger mechanism-based coordination procedure. The coordination procedure information includes trigger information or coordination information, the trigger information triggers the coordination procedure, and the coordination information includes information about a coordination resource.

In this embodiment of this application, the first information is indicated by using the first indication information, so that the first information can be identified, and the first information can be determined as the coordination procedure information based on the first indication information, to perform a coordination resource selection procedure. Signaling in a coordination resource selection process is indicated, so that a coordination resource selection mechanism is further improved, signaling identification complexity is reduced, and a coordination procedure is optimized.

In a possible implementation of the seventh aspect, a transceiver module of a second sidelink device may be configured to send the first indication information and the first information to a first sidelink device. In this case, the trigger information triggers the first sidelink device to coordinate the second sidelink device to select a resource. The information about the coordination resource is determined by the second sidelink device. The coordination resource is used by the second sidelink device to coordinate the first sidelink device to select a resource.

In this embodiment of this application, when the first information sent by the second sidelink device is the trigger information, the trigger information may be used by the first sidelink device to coordinate the second sidelink device to select a resource. When the first information sent by the second sidelink device is the coordination information, the coordination information may be used to coordinate the first sidelink device to select a resource. In this case, the second sidelink device coordinates the first sidelink device to select a resource. In this embodiment of this application, the first information is identified by using the first indication information, so that different coordination procedures may be identified, to complete corresponding coordination procedures.

In a possible implementation of the seventh aspect, the coordination information is trigger mechanism-based coordination information or non-trigger mechanism-based coordination information. The trigger mechanism means that in a process of performing a coordination procedure, a transmitting terminal device is required to send trigger information to a coordination terminal device, and a coordination terminal device sends coordination information based on the trigger information. In this case, the coordination information is referred to as the trigger mechanism-based coordination information. The non-trigger mechanism means that in a process of performing a coordination procedure, a coordination terminal device does not need to receive trigger information, and the coordination terminal device actively sends coordination information to a transmitting terminal device to coordinate the transmitting terminal device to select a resource. In this case, the coordination information is referred to as the non-trigger mechanism-based coordination information.

In this embodiment of this application, different coordination procedures can be further identified, so as to further improve a coordination resource selection mechanism and optimize the coordination procedure.

In a possible implementation of the seventh aspect, the first indication information may be used to determine that the first information is the coordination procedure information, and the first indication information may be further used to determine whether the coordination procedure information is the trigger information or the coordination information. In this embodiment of this application, not only the coordination procedure can be identified by using the first indication information, but also an information type of the first information in the coordination procedure can be further identified. Therefore, signaling identification complexity is reduced.

In a possible implementation of the seventh aspect, the transceiver module may be configured to send sidelink control information, where the sidelink control information includes 1^{st}-stage sidelink control information and 2^{nd}-stage sidelink control information. The first indication information may indicate that the 2^{nd}-stage sidelink control information is third-format sidelink control information, and the third-format sidelink control information may indicate that the first information is the trigger information. Alternatively, the first indication information may indicate that the 2^{nd}-stage sidelink control information is fourth-format sidelink control information, and the fourth-format sidelink information indicates that the first information is the coordination information.

In this embodiment of this application, the first indication information identifies the first information by indicating sidelink control information of different formats. When the first indication information indicates that the 2^{nd}-stage sidelink control information is the third-format sidelink control information, it can be learned that the first information is the trigger information in this case. When the first indication information indicates that the 2^{nd}-stage sidelink control information is the fourth-format sidelink control information, it can be learned that the first information is the coordination information in this case. Therefore, signaling identification complexity is reduced.

In a possible implementation of the seventh aspect, the first indication information is used to determine that the coordination procedure information is the coordination information. In this case, second indication information may further be sent, where the second indication information indicates that the coordination information is the trigger mechanism-based coordination information, or the second indication information indicates that the coordination information is the non-trigger mechanism-based coordination information.

In this embodiment of this application, when the first indication information indicates that the coordination procedure information is the coordination information, whether the coordination information is the trigger mechanism-based coordination information or the non-trigger mechanism-based coordination information may be further identified by using the second indication information. Therefore, it can be distinguished whether the coordination procedure in this case is a trigger mechanism-based coordination procedure or a non-trigger mechanism-based coordination procedure. In this way, the coordination resource selection mechanism is further improved.

In a possible implementation of the seventh aspect, the second indication information and the coordination information may be carried in same signaling. The transceiver module may be configured to send sidelink control information, where the sidelink control information includes 1^{st}-stage sidelink control information and 2^{nd}-stage sidelink control information. The 2^{nd}-stage sidelink control information may be fourth-format sidelink control information. The coordination information may be in the fourth-format sidelink control information. The second indication information, the same as the coordination information, may be in the fourth-format sidelink control information.

Alternatively, a part of the coordination information may be in the fourth-format sidelink control information, and the other part may be in the 1^{st}-stage sidelink control information. Alternatively, the second indication information may be in the fourth-format sidelink control information.

The second indication information may be carried in a field in the fourth-format sidelink control information.

The fourth-format sidelink control information may include a first field, and the first field indicates that the coordination information is in the fourth-format sidelink control information, or the first field indicates that the coordination information is in the fourth-format side link control information and the 1^{st}-stage sidelink control information.

In this embodiment of this application, the first indication information indicates that the 2^{nd}-stage sidelink control information is the fourth-format sidelink control information, and the fourth sidelink control information further indicates that the first information is the coordination information. Alternatively, the coordination information may be in the fourth-format sidelink control information, so that the coordination information can be decoded more quickly, and a location at which the coordination information is carried does not need to be additionally agreed on. Alternatively, a part of the coordination information may be in the fourth-format sidelink control information, and a part may be in the 1^{st}-stage sidelink control information. The two manners of carrying the coordination information may be indicated by using the first field in the fourth-format sidelink control information.

In a possible implementation of the seventh aspect, the first indication information indicates that the first information is the coordination procedure information. In this case, the first indication information may indicate that the first information is the coordination information or the trigger information, but the first indication information cannot indicate which one of the coordination information or the trigger information is the first information. Therefore, third indication information may be further sent, where the third indication information indicates that the coordination procedure information is one of the trigger information, the trigger mechanism-based coordination information, or the non-trigger mechanism-based coordination information.

In this embodiment of this application, the first indication information may indicate that the first information is the coordination procedure information, so as to identify the coordination procedure. Further, an information type of the first information in the coordination procedure may be identified by using the third indication information. The third indication information may indicate that the coordination procedure information is one of the trigger information, the trigger mechanism-based coordination information, or the non-trigger mechanism-based coordination information, so that not only the trigger information and the coordination information can be distinguished, but also whether the coordination information is based on a trigger mechanism or based on a non-trigger mechanism can be distinguished.

In a possible implementation of the seventh aspect, the transceiver module may be configured to send sidelink control information, where the sidelink control information includes 1^{st}-stage sidelink control information and 2^{nd}-stage sidelink control information. The first indication information may indicate that the 2^{nd}-stage sidelink control information is third-format sidelink control information, and the third-format sidelink control information may indicate that the first information is the coordination procedure information.

In this embodiment of this application, the first indication information may indicate a format of the sidelink control information, and the first information is determined as the coordination procedure information by identifying the format. An identification manner is simple, and signaling identification complexity is reduced.

In a possible implementation of the seventh aspect, the transceiver module may be configured to send sidelink control information, where the sidelink control information includes 1^{st}-stage sidelink control information and 2^{nd}-stage sidelink control information. The 2^{nd}-stage sidelink control information is third-format sidelink control information. The third indication information is carried in a field in the third-format sidelink control information. The field may be an identifier field in the third-format sidelink control information. When the identifier field has different values, the third indication information may separately indicate that the coordination procedure information is the trigger information, the trigger mechanism-based coordination information, or the non-trigger mechanism-based coordination information.

In a possible implementation of the seventh aspect, the transceiver module may be configured to send sidelink control information, where the sidelink control information includes 1^{st}-stage sidelink control information and 2^{nd}-stage sidelink control information. The 2^{nd}-stage sidelink control information is third-format sidelink control information. The coordination information may be carried in the third-format sidelink control information. Alternatively, a part of the coordination information may be carried in the third-format sidelink control information, and the other part may be carried in the 1^{st}-stage sidelink control information. The third-format sidelink control information may include a second field, and the second field indicates that the coordination information is in the third-format sidelink control information, or the second field indicates that the coordination information is in the third-format sidelink control information and the 1^{st}-stage sidelink control information.

In this embodiment of this application, the first indication information may indicate that the 2^{nd}-stage sidelink control information is the third-format sidelink control information, and the third-format sidelink control information may indicate that the first information is the coordination procedure information. Alternatively, the coordination information may be in the third-format sidelink control information, so that the coordination information can be decoded more quickly, and a location at which the coordination information is carried does not need to be additionally agreed on. Alternatively, a part of the coordination information may be in the third-format sidelink control information, and a part may be in the 1^{st}-stage sidelink control information. The two manners of carrying the coordination information may be indicated by using the second field in the third-format sidelink control information.

In a possible implementation of the seventh aspect, the transceiver module may be configured to send sidelink control information, where the sidelink control information includes 1^{st}-stage sidelink control information and 2^{nd}-stage sidelink control information. The first indication information is carried in a reserved field in the 1^{st}-stage sidelink control information or a 2^{nd}-stage sidelink control information format field in the 1^{st}-stage sidelink control information. When the reserved field or the 2^{nd}-stage sidelink control information format field has different values, the first indication information may indicate different content.

In this embodiment of this application, the reserved field or the 2^{nd}-stage sidelink control information format field is used to carry the first indication information. In addition, when the reserved field or the 2^{nd}-stage sidelink control information format field has different values, the first indication information may indicate different content. For unused fields in the sidelink control information, there is no need to define a new field, and an existing design and the reserved field of the 1^{st}-stage sidelink control information can be reused to a maximum extent.

In a possible implementation of the seventh aspect, the transceiver module may be configured to send sidelink control information, where the sidelink control information includes 1^{st}-stage sidelink control information and 2^{nd}-stage sidelink control information. The 2^{nd}-stage sidelink control information is third-format sidelink control information. The trigger information is in the third-format sidelink control information, or the trigger information is in the third-format sidelink control information and the 1^{st}-stage sidelink control information.

The third-format sidelink control information may include a third field, and the third field indicates that the trigger information is in the third-format sidelink control information, or the third field indicates that the trigger information is in the third-format sidelink control information or the 1^{st}-stage sidelink control information.

In this embodiment of this application, the trigger information carried in the third-format sidelink control information can be decoded more quickly, and a location at which the trigger information is carried does not need to be additionally agreed on.

In a possible implementation of the seventh aspect, the trigger information includes a parameter of the coordination procedure, and the parameter of the coordination procedure includes at least one of the following information: a number of subchannels, a selection window size, a sensing window size, a period, or priority information. The number of subchannels includes a number of subchannels used for PSCCH/PSCCH transmission, the selection window size includes a length and a start position of a resource selection window, and the sensing window size includes a length and a start position of a resource sensing window.

In a possible implementation of the seventh aspect, the non-trigger mechanism-based coordination information includes the information about the coordination resource and a parameter of the coordination procedure, and the parameter of the coordination procedure includes at least one of the following information: a number of subchannels, a selection window size, a sensing window size, a period, or priority information. The number of subchannels includes a number of subchannels used for PSCCH/PSCCH transmission, the selection window size includes a length and a start position of a resource selection window, and the sensing window size includes a length and a start position of a resource sensing window.

According to an eighth aspect, a communication apparatus is provided. The communication apparatus includes a processing module, configured to determine sidelink control information, and a transceiver module, configured to send the sidelink control information. The sidelink control information is second-format sidelink control information. The second-format sidelink control information indicates that the sidelink control information includes coordination procedure information, and the coordination procedure information is information used in a coordination procedure. The coordination procedure is a procedure in which one sidelink device coordinates another sidelink device to select a resource. The coordination procedure may include a trigger mechanism-based coordination procedure and a non-trigger mechanism-based coordination procedure. The coordination procedure information includes trigger information or coordination information. The trigger information triggers the coordination procedure, and the coordination information includes information about a coordination resource.

In this embodiment of this application, new-format sidelink control information is set. The sidelink control information is the second-format sidelink control information, and the second-format sidelink control information can indicate that the sidelink control information includes the coordination procedure information. It can be indicated, without using the indication information, that the sidelink control information includes the coordination procedure information, so that signaling overheads are reduced.

In a possible implementation of the eighth aspect, the sidelink control information includes 1^{st}-stage sidelink control information and 2^{nd}-stage sidelink control information. The determining that the sidelink control information is second-format sidelink control information includes: determining that the 1^{st}-stage sidelink control information is the second-format sidelink control information.

In this embodiment of this application, when the sidelink control information includes the 1^{st}-stage sidelink control information and the 2^{nd}-stage sidelink control information, only the 1^{st}-stage sidelink control information may be set to the second-format sidelink control information, to indicate the coordination procedure information. The 2^{nd}-stage sidelink control information does not need to be modified.

In a possible implementation of the eighth aspect, a transceiver module of a second sidelink device may be configured to send the sidelink control information to a first sidelink device. In this case, the trigger information triggers the first sidelink device to coordinate the second sidelink device to select a resource. The information about the coordination resource is determined by the second sidelink device. The coordination resource is used by the second sidelink device to coordinate the first sidelink device to select a resource.

In this embodiment of this application, when the coordination procedure information is the trigger information, the first sidelink device may coordinate, based on the trigger information, the second sidelink device to select a resource. When the coordination procedure information is the coordination information, the coordination information may be used to coordinate the first sidelink device to select a resource. In this case, the second sidelink device coordinates the first sidelink device to select a resource. In this embodiment of this application, whether the sidelink control information includes the coordination procedure information is identified by using the second-format sidelink control information.

In a possible implementation of the eighth aspect, the coordination information is trigger mechanism-based coordination information or non-trigger mechanism-based coordination information. The trigger mechanism means that in a process of performing a coordination procedure, a transmitting terminal device is required to send trigger information to a coordination terminal device, and a coordination terminal device sends coordination information based on the trigger information. In this case, the coordination information is referred to as the trigger mechanism-based coordination information. The non-trigger mechanism means that in a process of performing a coordination procedure, a coordination terminal device does not need to receive trigger information, and the coordination terminal device actively sends coordination information to a transmitting terminal device to coordinate the transmitting terminal device to select a resource. In this case, the coordination information is referred to as the non-trigger mechanism-based coordination information.

In this embodiment of this application, different coordination procedures can be further identified, so as to further improve a coordination resource selection mechanism and optimize the coordination procedure.

In a possible implementation of the eighth aspect, the second-format sidelink control information includes a first field, and the first field is used to determine that the coordination procedure information is one of the trigger information, the trigger mechanism-based coordination information, or the non-trigger mechanism-based coordination information.

In this embodiment of this application, it can be learned, based on the second-format sidelink control information, that the first information is the coordination procedure information, so as to identify the coordination procedure. Further, an information type of the first information in the coordination procedure may be identified by using the first field in the second-format sidelink control information. The first field may indicate that the coordination procedure information is one of the trigger information, the trigger mechanism-based coordination information, or the non-trigger mechanism-based coordination information, so that not only the trigger information and the coordination information can be distinguished, but also whether the coordination information is based on a trigger mechanism or based on a non-trigger mechanism can be distinguished.

In a possible implementation of the eighth aspect, the trigger information includes a parameter of the coordination procedure, and the parameter of the coordination procedure includes at least one of the following information: a number of subchannels, a selection window size, a sensing window size, a period, or priority information. The number of subchannels includes a number of subchannels used for PSCCH/PSCCH transmission, the selection window size includes a length and a start position of a resource selection window, and the sensing window size includes a length and a start position of a resource sensing window.

In a possible implementation of the eighth aspect, the non-trigger mechanism-based coordination information includes the information about the coordination resource and a parameter of the coordination procedure, and the parameter of the coordination procedure includes at least one of the following information: a number of subchannels, a selection window size, a sensing window size, a period, or priority information. The number of subchannels includes a number of subchannels used for PSCCH/PSCCH transmission, the selection window size includes a length and a start position of a resource selection window, and the sensing window size includes a length and a start position of a resource sensing window.

According to a ninth aspect, a communication apparatus is provided. The communication apparatus includes a transceiver and a processor. The transceiver is configured to execute instructions for receiving and sending information, and the processor is configured to perform other steps. Specifically, the communication apparatus is configured to perform the method according to any possible implementation of the first aspect.

According to a tenth aspect, a communication apparatus is provided. The communication apparatus includes a transceiver and a processor. The transceiver is configured to execute instructions for receiving and sending information, and the processor is configured to perform other steps. Specifically, the communication apparatus is configured to perform the method according to any possible implementation of the second aspect.

According to an eleventh aspect, a communication apparatus is provided. The communication apparatus includes a transceiver and a processor. The transceiver is configured to execute instructions for receiving and sending information, and the processor is configured to perform other steps. Specifically, the communication apparatus is configured to perform the method according to any possible implementation of the third aspect.

According to a twelfth aspect, a communication apparatus is provided. The communication apparatus includes a transceiver and a processor. The transceiver is configured to execute instructions for receiving and sending information, and the processor is configured to perform other steps. Specifically, the communication apparatus is configured to perform the method according to any possible implementation of the fourth aspect.

According to a thirteenth aspect, a computer-readable storage medium is provided. The computer-readable storage medium stores a computer program. The program is executed by a processor, to implement the method according to any possible implementation of the first aspect.

According to a fourteenth aspect, a computer-readable storage medium is provided. The computer-readable storage medium stores a computer program. The program is executed by a processor, to implement the method according to any possible implementation of the second aspect.

According to a fifteenth aspect, a computer-readable storage medium is provided. The computer-readable storage medium stores a computer program. The program is executed by a processor, to implement the method according to any possible implementation of the third aspect.

According to a sixteenth aspect, a computer-readable storage medium is provided. The computer-readable storage medium stores a computer program. The program is executed by a processor, to implement the method according to any possible implementation of the fourth aspect.

According to a seventeenth aspect, a communication apparatus is provided. The communication apparatus includes a memory and a processor. The memory is configured to store instructions, the processor is configured to execute the instructions stored in the memory, and the execution of the instructions stored in the memory enables the processor to perform the method according to any possible implementation of the first aspect.

According to an eighteenth aspect, a communication apparatus is provided. The communication apparatus includes a memory and a processor. The memory is configured to store instructions, the processor is configured to execute the instructions stored in the memory, and the execution of the instructions stored in the memory enables the processor to perform the method according to any possible implementation of the second aspect.

According to a nineteenth aspect, a communication apparatus is provided. The communication apparatus includes a memory and a processor. The memory is configured to store instructions, the processor is configured to execute the instructions stored in the memory, and the execution of the instructions stored in the memory enables the processor to perform the method according to any possible implementation of the third aspect.

According to a twentieth aspect, a communication apparatus is provided. The communication apparatus includes a memory and a processor. The memory is configured to store instructions, the processor is configured to execute the instructions stored in the memory, and the execution of the instructions stored in the memory enables the processor to perform the method according to any possible implementation of the fourth aspect.

According to a twenty-first aspect, a communication system is provided. The communication system includes the communication apparatus according to the fifth aspect and the communication apparatus according to the seventh aspect.

According to a twenty-second aspect, a communication system is provided. The communication system includes the communication apparatus according to the sixth aspect and the communication apparatus according to the eighth aspect.

According to a twenty-third aspect, a computer program product including instructions is provided. The computer program product is used to store a computer program. When the computer program is run on a computer, the computer is enabled to perform the method according to any possible implementation of the first aspect.

According to a twenty-fourth aspect, a computer program product including instructions is provided. The computer program product is used to store a computer program. When the computer program is run on a computer, the computer is enabled to perform the method according to any possible implementation of the second aspect.

According to a twenty-fifth aspect, a computer program product including instructions is provided. The computer program product is used to store a computer program. When the computer program is run on a computer, the computer is enabled to perform the method according to any possible implementation of the third aspect.

According to a twenty-sixth aspect, a computer program product including instructions is provided. The computer program product is used to store a computer program. When the computer program is run on a computer, the computer is enabled to perform the method according to any possible implementation of the fourth aspect.

### BRIEF DESCRIPTION OF DRAWINGS

FIG. 1 is a schematic diagram of a communication system applicable to an embodiment of this application;
FIG. 2 is a flowchart of a trigger-based coordination mechanism according to an embodiment of this application;
FIG. 3 is a sequence diagram of a trigger-based coordination mechanism according to an embodiment of this application;
FIG. 4 is a flowchart of a non-trigger-based coordination mechanism according to an embodiment of this application;
FIG. 5 is a sequence diagram of a non-trigger-based coordination mechanism according to an embodiment of this application;
FIG. 6 is a flowchart of a communication method according to an embodiment of this application;
FIG. 7 is a flowchart of a communication method according to Embodiment 1 of this application;
FIG. 8 is a flowchart of another communication method according to Embodiment 1 of this application;
FIG. 9 is a flowchart of a communication method according to Embodiment 2 of this application;
FIG. 10 is a flowchart of a communication method according to Embodiment 3 of this application;
FIG. 11 is a schematic structural diagram of a communication apparatus according to an embodiment of this application;
FIG. 12 is another schematic structural diagram of a communication apparatus according to an embodiment of this application; and
FIG. 13 is another schematic structural diagram of a communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.
1. A terminal device in this application includes a device that provides a voice for a user, a device that provides data connectivity for a user, or a device that provides a voice and data connectivity for a user. For example, the terminal device may include a handheld device having a wireless connection function, or a processing device connected to a wireless modem. The terminal device may also be referred to as a terminal for short. The terminal may communicate with a core network through a radio access network (radio access network, RAN), and exchange a voice or data with the RAN, or exchange a voice and data with the RAN. The terminal may include user equipment (user equipment, UE), a wireless terminal, a mobile terminal, a device-to-device (device-to-device, D2D) communication terminal, a vehicle to everything (vehicle to everything, V2X) terminal, a roadside unit (road side unit, RSU), a machine-to-machine/machine type communication (machine-to-machine/machine type communication, M2M/MTC) terminal, an internet of things (internet of things, IoT) terminal, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. The terminal device may include a mobile phone (or referred to as a "cellular" phone), a computer with a mobile terminal, a portable, pocket-sized, handheld, or computer built-in mobile apparatus, or the like. The terminal device may include a device such as a personal communications service (personal communications service, PCS) phone, a cordless phone, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capability, or a device with a limited computing capability. The terminal device may include an information sensing device, for example, a barcode sensor, radio frequency identification (radio frequency identification, RFID) sensor, a global positioning system (global positioning system, GPS) sensor, or a laser scanner.

As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

However, if the terminals described above are located in a vehicle, for example, placed in the vehicle or mounted in the vehicle, the terminals may be considered as vehicle-mounted terminals. For example, the vehicle-mounted terminals are also referred to as on-board units (on-board unit, OBU).

In the embodiments of this application, an apparatus configured to implement a function of the terminal may be a terminal, or may be a circuit that can support the terminal in implementing the function, for example, a circuit that may be applied to a chip system. The chip system may be installed in the terminal. In this embodiment of this application, the chip system may include a chip, or may include a chip and another discrete component. In the technical solutions provided in embodiments of this application, the technical solutions provided in embodiments of this application are described by using an example in which the apparatus configured to implement the function of the terminal is the terminal

2. A network device in this application may include a radio access network (radio access network, RAN) device, for example, a base station (for example, an access point). The network device may be a device that communicates with the terminal device through an air interface and that is in an access network, or a network device in a vehicle-to-everything (vehicle-to-everything, V2X) technology is a road side unit (road side unit, RSU). The base station may be configured to mutually convert a received over-the-air frame and an IP packet, and serve as a router between the terminal and a remaining part of the access network. The remaining part of the access network may include an IP network. The RSU may be a fixed infrastructure entity supporting application of the V2X, and may exchange a message with another entity supporting application of the V2X. The network device may further coordinate attribute management of the air interface. For example, the network device may include an evolved NodeB (NodeB, eNB, or e-NodeB, evolved NodeB) in a long term evolution (long term evolution, LTE) system or a long term evolution-advanced (long term evolution-advanced, LTE-A) system, may include a next generation NodeB (next generation NodeB, gNB) in an evolved packet core (evolved packet core, EPC) network or a 5th generation (5th generation, 5G) new radio (new radio, NR) system (also referred to as an NR system for short), or may include a central unit (central unit, CU) and a distributed unit (distributed unit, DU) in a cloud access network (cloud radio access network, Cloud RAN) system. This is not limited in the embodiments of this application. The network device may further include a core network device, and the core network device includes, for example, an access and mobility management function (access and mobility management function, AMF). It should be noted that the RSU may be a network RSU, or may be a terminal device RSLJ. When the RSU is used as a network RSU, the RSU performs a function of a network device. When the RSU is used as a terminal device RSU, the RSU performs a function of a terminal device.

### 3. Sidelink (Sidelink, SL)

In V2X, a terminal device may perform communication in two manners. In a first manner, terminal devices communicate with each other through a Uu interface. The Uu interface is a radio interface between a terminal device and a network device, and communication between the terminal devices needs to be forwarded by a node such as the network device. In a second manner, terminal devices perform side communication with each other, that is, the terminal devices may perform direct communication with each other without forwarding performed by the network device. In this case, a link directly connected between the terminal devices is referred to as a sidelink.

Generally, in a sidelink technology, terminal devices may be directly connected to each other to transmit information through a PC5 interface. In this application, a sidelink may be represented by sidelink in English, or may be represented by a side link. Both have a same meaning and are English descriptions of the sidelink in this application. This technology not only provides information exchange within a coverage service range of a network device, but also provides information exchange in a place without coverage of a network device. A terminal device that is authorized to perform special communication may use a sidelink communication manner. Certainly, the sidelink communication may be used to transmit service data of intelligent transportation, or may be used to transmit a mobile Internet service. This is not limited in this application.

### 4. Sidelink control information (Sidelink Control Information, SCI)

The sidelink control information includes sidelink scheduling information or indication information necessary for sidelink transmission, for example, indication information of a time-frequency resource block used during transmission, a modulation and coding scheme, a source identifier ID, and a target identifier ID. In NR, V2X sidelink control information is sent in two stages. The first stage SCI (the first stage SCI) is carried on a physical sidelink control channel (Physical Sidelink Control Channel, PSCCH) and contains information for sensing and information about PSSCH resource allocation. The first stage SCI may also be referred to as 1^{st}-stage SCI.

The second stage SCI is carried on a physical sidelink shared channel (Physical Sidelink Shared Channel, PSSCH), and the second phase SCI (the second stage SCI) carries information required for identifying and/or decoding an associated sidelink shared channel (Sidelink Shared Channel, SL-SCH), indication information of a hybrid automatic repeat request (Hybrid Automatic Repeat Request, HARQ), trigger information of channel state information (Channel State Information, CSI) feedback, and the like. The second stage SCI may also be referred to as 2^{nd}-stage SCI.

### 5. User-selected resource mode (mode-2)

In V2X, there are two transmission modes related to sidelink resource allocation. One is a mode (mode-1) in which a network device performs resource allocation, and the other is a user-selected resource mode (mode-2). The network device resource allocation mode is mainly applied to V2X communication in a case of network coverage. The network device centrally allocates resources based on a buffer status report (Buffer Status Report, BSR) of the terminal device. Resources can be allocated in dynamic mode or preconfigured mode. Resources allocated by the network device include an initial resource and/or a retransmission resource.

In the dynamic mode, the network device notifies, by using downlink control information (Downlink Control Information, DCI), the transmitting terminal device of a time-frequency resource for sidelink data. After receiving the DCI, the transmitting terminal device sends the data. After decoding the data, a receiving terminal device feeds back hybrid automatic repeat request (Hybrid Automatic Repeat Request, HARQ) information of a sidelink to the transmitting terminal device. Then, the transmitting terminal device forwards the sidelink-HARQ information to the base station.

The user-selected resource mode (mode-2) may further include four sub-modes:
(1) mode-2(a): The transmitting terminal device selects a transmission resource for communication. Specifically, the transmitting terminal device selects a transmission resource from remaining resources after excluding a reserved resource from a resource pool based on historical sensing information, and sends sidelink data after completing transmission resource selection, where the sensing information includes a resource reserved by another terminal device.
(2) mode 2(b): A transmission resource of the transmitting terminal device is selected with the coordination of another terminal device.
(3) mode 2(c): A transmission resource of the transmitting terminal device is selected from resources preconfigured by using higher layer signaling;
(4) mode 2(d): Aplurality of terminal devices first perform a group establishment operation, one terminal device in the group is a scheduling terminal device, other terminal devices are member terminal devices, and the scheduling terminal device is responsible for transmission resources of the member terminal devices.

In mode-2(a) mode, the transmitting terminal device selects, in a resource selection window based on a resource sensing result of the transmitting terminal device, a transmission resource for communication. It is assumed that the transmitting terminal device triggers resource selection in a slot n, and the resource sensing window may be defined as T slots used before resource selection is triggered.

### 6. Slot (Time Slot)

In an NR system, a slot is a minimum scheduling unit of time. Time is divided into periodic frames. Each frame is then segmented into several slots. Neither frames nor slots do not overlap with each other. Each slot is a basic communication unit. Slot duration is determined by a subcarrier spacing used during transmission. For example, for a 15 kHz subcarrier spacing, duration of one slot may be 1 ms. For another example, for a 30 kHz subcarrier spacing, duration of one slot may be 0.5 ms. For another example, for a 60 kHz subcarrier spacing, duration of one slot may be 0.25 ms. For another example, for a 120 kHz subcarrier spacing, duration of one slot may be 0.125 ms. Optionally, when one slot is used as a basic scheduling unit, all symbols in one slot may be used for transmission, or some symbols in one slot may be used for transmission. This is not limited in the present invention. For example, a number of symbols in one slot may be 12 symbols or 14 symbols. In an example of 14 symbols, the last symbol may be used as a symbol for sending-reception conversion. In this case, only 13 symbols are used for sidelink transmission.

7. The technical solutions in embodiments of this application may be applied to various communication systems, for example, an LTE system, a worldwide interoperability for microwave access (Worldwide Interoperability for Microwave Access, WiMAX) communication system, a 5th Generation (5th Generation, 5G) system such as NR, and a future communication system such as a 6G system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

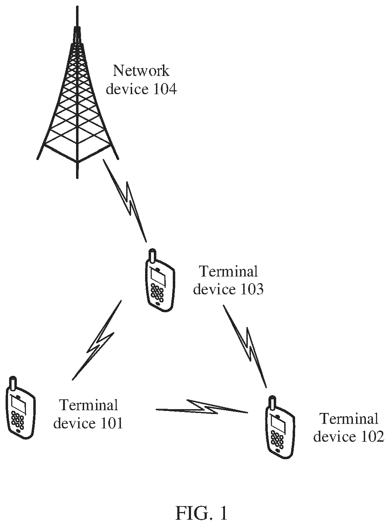

For ease of understanding embodiments of this application, a communication system shown in FIG. 1 is first used as an example to describe in detail a communication system applicable to embodiments of this application. FIG. 1 is a schematic diagram of a communication system to which a communication method according to an embodiment of this application is applicable. As shown in FIG. 1, the communication system 100 includes a plurality of terminal devices, for example, a terminal device 101 to a terminal device 103. The terminal device 101, the terminal device 102, and the terminal device 103 may directly communicate with each other. For example, the terminal device 101 and the terminal device 102 may separately or simultaneously send data to the terminal device 103. The wireless communication device further includes one or more network devices, for example, a network device 104 in FIG. 1. All the terminal devices 101 to 103 may communicate with the network device 104. For example, in FIG. 1, the network device 104 communicates with the terminal device 103.

For ease of understanding, FIG. 1 shows the terminal device 101, the terminal device 102, the terminal device 103, and the network device 104 as an example. However, this does not constitute any limitation on this application. The wireless communication system may further include more network devices, or may include more or fewer terminal devices. This is not limited in this application.

The following describes embodiments of this application in detail with reference to the accompanying drawings.

First, a trigger-based coordination mechanism and a non-trigger-based coordination mechanism that are provided in embodiments of this application are described. The trigger-based coordination mechanism and the non-trigger-based coordination mechanism are two modes of a coordination procedure provided in embodiment of this application. The coordination procedure includes a procedure in which a transmitting terminal device selects a resource with the coordination of the coordination terminal device.

### Trigger-based coordination mechanism:

The trigger-based coordination mechanism means that the transmitting terminal sends trigger information to the coordination terminal, where the trigger information triggers a coordination procedure. The coordination procedure is a procedure in which the coordination terminal coordinates the transmitting terminal to select a resource. The coordination terminal sends coordination information to the transmitting terminal based on the received trigger information, and the transmitting terminal selects a resource based on the coordination information.

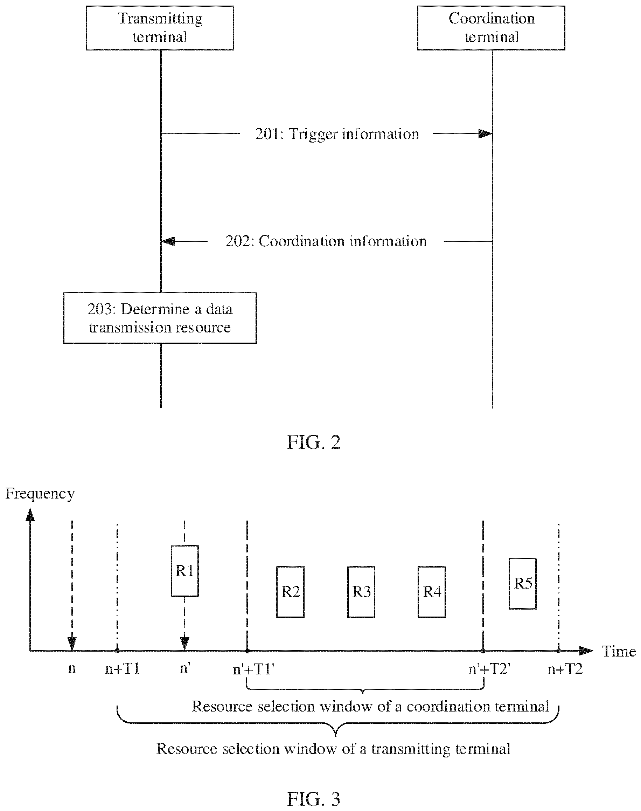

FIG. 2 is a flowchart of the trigger-based coordination mechanism according to an embodiment of this application. FIG. 3 is a sequence diagram of the trigger-based coordination mechanism according to an embodiment of this application. Descriptions of the trigger-based coordination mechanism in FIG. 2 and FIG. 3 are merely examples. Parameters, a number of resources, a time window length, and the like shown in FIG. 2 and FIG. 3 may change. A solution based on an idea the same as that in FIG. 2 or FIG. 3 also belongs to the trigger-based coordination mechanism in embodiments of this application. In FIG. 3, a horizontal coordinate is time, a vertical coordinate is frequency, and R1, R2, R3, R4 and R5 each represent a time-frequency resource including time and frequency. A transmitting terminal starts a coordination procedure in a slot n, and sends trigger information in a slot *n*' to trigger the coordination procedure. [*n* + *T*1*,n* + *T*2] is a resource selection window of the transmitting terminal, and *T*2 *- T*1 is a time length of the resource selection window of the transmitting terminal. [*n*'+*T*1', *n*'+*T*2'] is a resource selection window of a coordination terminal, and *T*2' - *T*1*'* is a time length of the resource selection window of the coordination terminal. The resource selection window is used by a terminal device to select a resource. As shown in FIG. 2 and FIG. 3, the trigger-based coordination mechanism includes:
201: The transmitting terminal sends the trigger information to the coordination terminal.

After starting the coordination procedure, the transmitting terminal first selects, in a resource selection window [*n* + *T*1*,n* + *T*2] based on a historical sensing result of the transmitting terminal, a resource (R1) for sending the trigger information to the coordination terminal. The resource is located in a slot *n'*. *T*1 may be set based on processing time required for determining the resource selection window after the transmitting terminal starts the coordination procedure. The resource selection window of the transmitting terminal has two functions. One function is to select a resource to send the trigger information, and the other function is to independently select a resource as a candidate resource for data transmission. For example, the transmitting terminal may independently select resources R4 and R5. The candidate resource also includes an available resource or an excluded resource.

202: The coordination terminal sends the coordination information to the transmitting terminal.

After receiving, in the slot n', the trigger information sent by the transmitting terminal, the coordination terminal selects a resource (R2) in the resource selection window [*n*'+*T*1', *n*'+*T*2'] based on the historical sensing result of the coordination terminal. The resource is for sending the coordination information to the transmitting terminal. In addition, the coordination terminal further selects resources (R3 and R4) for the transmitting terminal based on the historical sensing result of the coordination terminal, and recommends the resources to the transmitting terminal for data transmission. The resources recommended by the coordination terminal to the transmitting terminal include: a resource recommended by the coordination terminal to the transmitting terminal for use or a resource excluded by the coordination terminal for the transmitting terminal. The excluded resource is a resource that is not recommended to the transmitting terminal for use. Herein, for example, R3 and R4 are the resources recommended by the coordination terminal for the transmitting terminal to use. *T*1' indicates processing time required for the coordination terminal to select a resource based on the trigger information after the coordination terminal receives the trigger information.

203: The transmitting terminal determines a data transmission resource.

After receiving the coordination information sent by the coordination terminal, the transmitting terminal determines, based on the resources (R3 and R4) that are recommended by the coordination terminal to the transmitting terminal and that are used for data transmission and the data transmission resources (R4 and R5) that are selected by the transmitting terminal based on the historical sensing result of the transmitting terminal, the resource (R4) finally used for data transmission, and performs data transmission.

### Non-trigger-based coordination mechanism:

The non-trigger-based coordination mechanism means that the coordination terminal independently sends the coordination information to the transmitting terminal to coordinate the transmitting terminal to select a resource. In this mechanism, the transmitting terminal may not send the trigger information to the coordination terminal.

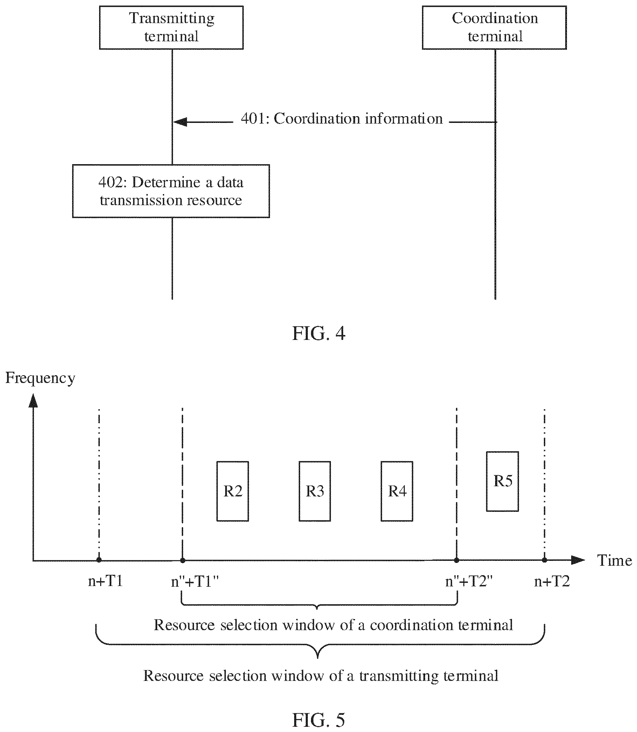

FIG. 4 is a flowchart of the non-trigger-based coordination mechanism according to an embodiment of this application. FIG. 5 is a sequence diagram of the non-trigger-based coordination mechanism according to an embodiment of this application. Descriptions of the non-trigger-based coordination mechanism in FIG. 4 and FIG. 5 are merely examples. Parameters, a number of resources, a time window length, and the like shown in FIG. 4 and FIG. 5 may change. A solution based on an idea the same as that in FIG. 4 or FIG. 5 also belongs to the non-trigger-based coordination mechanism in embodiments of this application. In FIG. 4, a horizontal coordinate is time, a vertical coordinate is frequency, and R2 to R5 each represent a time-frequency resource including time and frequency. [*n* + *T*1*,* n + *T*2] is a resource selection window of a transmitting terminal, and *T*2 - *T*1 is a time length of the resource selection window of the transmitting terminal. [*n*"+*T*1", *n*"+*T*2"] is a resource selection window of a coordination terminal, and *T*2*"* - *T*1*"* is a time length of the resource selection window of the coordination terminal. The resource selection window is used by a terminal device to select a resource. As shown in FIG. 4 and FIG. 5, for the non-trigger-based coordination mechanism, the coordination terminal actively triggers resource selection. The non-trigger-based coordination mechanism includes the following steps.

401: The coordination terminal sends coordination information to the transmitting terminal.

The coordination terminal selects a resource (R2) in the resource selection window [*n*"+*T*1", *n*"+*T*2"] based on a historical sensing result of the coordination terminal. The resource is for sending the coordination information to the transmitting terminal. In addition, the coordination terminal further selects resources (R3 and R4) for the transmitting terminal based on the historical sensing result of the coordination terminal, and recommends the resources to the transmitting terminal for data transmission. The resources recommended by the coordination terminal to the transmitting terminal include: a resource recommended by the coordination terminal to the transmitting terminal for use or a resource excluded by the coordination terminal for the transmitting terminal. The excluded resource is a resource that is not recommended to the transmitting terminal for use. Herein, for example, R3 and R4 are the resources recommended by the coordination terminal for the transmitting terminal to use.

402: The transmitting terminal determines a data transmission resource.

After receiving the coordination information sent by the coordination terminal, the transmitting terminal determines, based on the resources (R3 and R4) that are recommended by the coordination terminal to the transmitting terminal and that are used for data transmission and the data transmission resources (R4 and R5) that are selected by the transmitting terminal based on the historical sensing result of the transmitting terminal, the resource (R4) finally used for data transmission, and performs data transmission.

Based on the foregoing descriptions of the trigger-based coordination mechanism and the non-trigger-based coordination mechanism provided in embodiments of this application, the following describes, with reference to the accompanying drawings, communication methods provided in embodiments of this application.

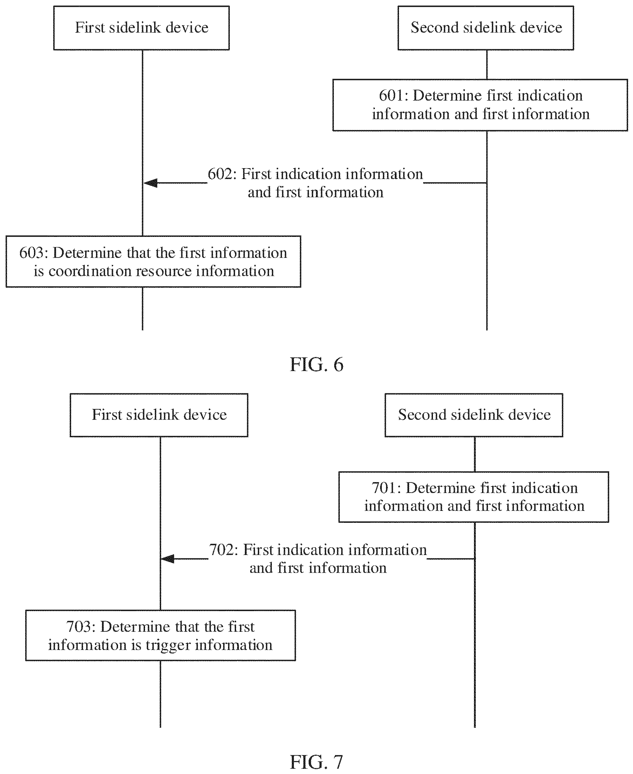

FIG. 6 is a flowchart of a communication method according to an embodiment of this application. The following describes in detail the communication method provided in this embodiment of this application with reference to FIG. 6. The communication method provided in this embodiment of this application is applicable to a first sidelink device, and includes the following steps.

601: A second sidelink device determines first indication information and first information.

The first indication information and the first information may be determined by the second sidelink device, may be indicated by a network device to the second sidelink device by using downlink control information (Downlink Control Information, DCI), or may be configured or preconfigured by the network device for the second sidelink device through radio resource control (Radio Resource Control, RRC).

602: The first sidelink device receives the first indication information and the first information that are sent by the second sidelink device.

603: The first sidelink device determines, based on the first indication information, that the first information is coordination procedure information, where the coordination procedure information includes trigger information or coordination information, the trigger information triggers a coordination procedure, and the coordination information includes information about a coordination resource.

In this embodiment of this application, a sidelink transmission technology is used as an example. In a sidelink transmission scenario, the first sidelink device and the second sidelink device may be devices of a same type. For example, the first sidelink device and the second sidelink device may be terminal devices. In an example in which both the first sidelink device and the second sidelink device are terminal devices, the first sidelink device may be an OBU, and the second sidelink device may be a terminal RSU, or the first sidelink device is a terminal RSU, and the second sidelink device is an OBU. Alternatively, the first sidelink device and the second sidelink device may be network devices.

The trigger information and the coordination information in this embodiment of this application may be the trigger information and the coordination information in the foregoing coordination procedure. The trigger information is the trigger information in the trigger-based coordination mechanism, that is, the trigger information in step 201 in FIG. 2. A terminal device that receives the trigger information coordinates another terminal device to select a resource. The coordination information may be the coordination information in step 202 in FIG. 2. In this case, the coordination information is the coordination information in the trigger-based coordination mechanism. Alternatively, the coordination information may be the coordination information in step 401 in FIG. 4. In this case, the coordination information is the coordination information in the non-trigger-based coordination mechanism. The coordination procedure in this embodiment of this application is a coordination resource selection process, including a trigger-based coordination mechanism and a non-trigger-based coordination mechanism.

In step 603 in this embodiment of this application, the first sidelink device may determine, based on the first indication information, that the first information is the coordination procedure information, where the coordination procedure information includes the coordination information or the trigger information. Step 603 includes two meanings: Meaning 1: The first sidelink device can determine, based on the first indication information, that the first information is the trigger information, or the first sidelink device can determine, based on the first indication information, that the first information is the coordination information. Meaning 2: The first sidelink device can determine, based on the received first indication information, that the first information is the trigger information or the coordination information, but cannot determine, based on the first indication information, which one of the trigger information and the coordination information is the first information.

In this embodiment of this application, the first sidelink device receives the first information sent by the second sidelink device. When the first sidelink device determines, based on the first indication information, that the first information is the trigger information, the trigger information triggers the coordination procedure, and the first sidelink device coordinates the second sidelink device to select a resource. The first sidelink device further performs step 202 in the trigger-based coordination mechanism in FIG. 2, and the first sidelink device recommends a resource to the second sidelink device based on a historical sensing result of the first sidelink device.

When the first sidelink device determines, based on the first indication information, that the first information is the coordination information, the coordination information may include the information about the coordination resource. The information about the coordination resource is determined by the second sidelink device, and used to coordinate the first sidelink device to select a resource. The coordination resource is a resource recommended by the second sidelink device to the first sidelink device, and used to coordinate the first sidelink device to select a resource. The coordination resource includes a resource recommended to the first sidelink device for use and/or a resource excluded for the first sidelink device.

The coordination information received by the first sidelink device may be trigger mechanism-based coordination information, or may be non-trigger mechanism-based coordination information. When the coordination information is the trigger mechanism-based coordination information, the first sidelink device sends the trigger information to the second sidelink device before receiving the coordination information, and the second sidelink device sends the coordination information to the first sidelink device in response to the trigger information. When the coordination information is the non-trigger mechanism-based coordination information, the second sidelink device independently sends the coordination information to the first sidelink device.

In this embodiment of this application, the first indication information indicates the first information, so that the first sidelink device can identify the first information, and the first sidelink device can determine, based on the first indication information, that the first information is the coordination procedure information, to perform a coordination resource selection procedure. Signaling in a coordination resource selection process is indicated, so that a coordination resource selection mechanism is further improved, signaling identification complexity is reduced, and a coordination procedure is optimized.

FIG. 6 is general descriptions of a technical solution provided in embodiments of this application. According to the principle and idea of the solution in FIG. 6, the following describes optional implementations of embodiments of this application with reference to Embodiment 1 to Embodiment 3. Content described in FIG. 6 is applicable to Embodiment 1 to Embodiment 3 of this application.

### Embodiment 1

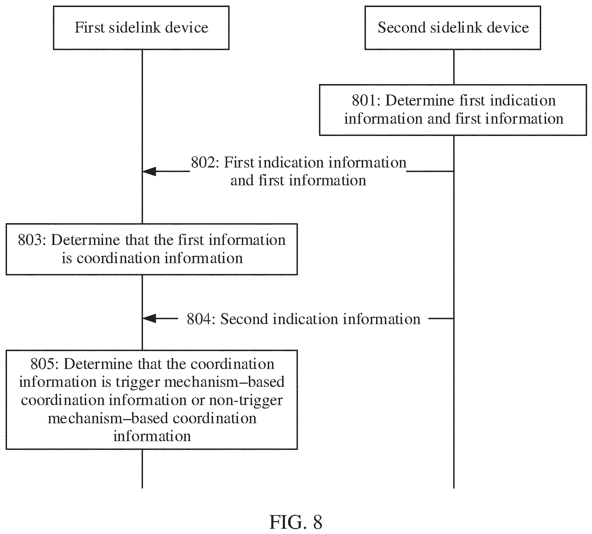

FIG. 7 and FIG. 8 are flowcharts of two communication methods according to Embodiment 1 of this application. An implementation of Embodiment 1 of this application is as follows: First indication information indicates that first information is trigger information or coordination information, which is the meaning 1 described in step 603: The first sidelink device can determine, based on the first indication information, that the first information is the trigger information, or the first sidelink device can determine, based on the first indication information, that the first information is the coordination information. When the first sidelink device determines, based on the first indication information, that the first information is the coordination information, the first sidelink device may further determine, based on second indication information, that the coordination information is trigger mechanism-based coordination information, or the first sidelink device determines, based on second indication information, that the coordination information is non-trigger mechanism-based coordination information.

FIG. 7 is a flowchart of a communication method according to Embodiment 1 of this application. FIG. 7 shows an example of a case in which the first sidelink device determines, based on the first indication information, that the first information is the trigger information. As shown in FIG. 7, the method includes the following steps.

701: A second sidelink device determines first indication information and first information.

702: The first sidelink device receives the first indication information and the first information that are sent by the second sidelink device.

703: The first sidelink device determines, based on the first indication information, that the first information is trigger information.

In step 701 and step 702, sidelink scheduling information or indication information necessary for sidelink transmission may be transmitted between sidelink devices by using SCI in a sidelink transmission scenario, and the first indication information may be in the SCI. The SCI includes 1^{st}-stage sidelink control information and 2^{nd}-stage sidelink control information, and may be respectively written as 1^{st}-stage SCI and 2^{nd}-stage SCI.

Table 1 shows a part of content of a type of the 1^{st}-stage SCI according to this embodiment of this application. Table 1 is an example rather than a limitation. The 1^{st}-stage SCI may further include another part of content not shown in Table 1. The 1^{st}-stage SCI in this embodiment of this application may alternatively have content and a format different from those in Table 1.

**Table 1: Part of content of the 1^{st}-stage SCI**

| Row number | Field |
|---|---|
| First row | RA: frequency |
| Second row | RA: time |
| Third row | Period |
| Fourth row | MCS |
| Fifth row | Reserved bits |
| Sixth row | 2^{nd}-stage SCI format |

In Table 1, "field" represents main fields in the 1^{st}-stage SCI. The RA: frequency field in the first row of Table 1 indicates frequency domain information of resource allocation (Resource Allocation, RA). The RA: time field in the second row of Table 1 indicates time domain information of resource allocation. Period in the third row of Table 1 indicates period information of resource allocation. The MCS field in the fourth row of Table 1 indicates a modulation and coding scheme (Modulation and Coding Scheme, MCS). The Reserved bits field in the fifth row of Table 1 is a reserved field or a reserved field, and a maximum bit value available for the field is 2 to 4 bits. The 2^{nd}-stage SCI format in the sixth row of Table 1 is a 2^{nd}-stage sidelink control information format field, and indicates a 2^{nd}-stage SCI format. A maximum bit value available for this field is two bits.

According to the main content of the 1^{st}-stage SCI shown in Table 1, the first indication information is carried in a reserved field in the 1^{st}-stage SCI. The first indication information may be alternatively carried in the 2^{nd}-stage sidelink control information format field 2^{nd}-stage SCI format. When the reserved field or the 2^{nd}-stage sidelink control information format field has different values, the first indication information may indicate different content.

Different content may be indicated based on different values of the first indication information. When the first indication information is carried in the reserved field, and a value of the reserved field is "00", the first indication information indicates that the first information is the trigger information. When the reserved field is "01", the first indication information indicates that the first information is the coordination information. When the first indication information is the 2^{nd}-stage sidelink control information, and a value of the 2^{nd}-stage sidelink control information format field is "10", the first indication information indicates that the first information is the trigger information. When the 2^{nd}-stage sidelink control information format field is "11", the first indication information indicates that the first information is the coordination information.

The following describes content related to step 703.

How the first indication information indicates that the first information is the trigger information is first described.

In an implementation, the first indication information is carried in a reserved field in the 1^{st}-stage SCI. Table 2 shows an example of a value of the reserved field in the 1^{st}-stage SCI and a meaning of the value.

**Table 2: Value of the reserved field in the 1^{st}-stage SCI**

| Field in the 1^{st}-stage SCI | Value | Indicated content |
|---|---|---|
| Reserved bits | 00 | SCI format 2-C |

When the value of the reserved field in the 1^{st}-stage SCI is "00", the value indicates that the 2^{nd}-stage SCI is third-format sidelink control information SCI format 2-C. The third-format sidelink control information SCI format 2-C indicates that the first information is the trigger information. In other words, the third-format sidelink control information SCI format 2-C indicates that the first information is the trigger information.

The first indication information may alternatively be carried in a 2^{nd}-stage sidelink control information format field. Table 3 shows an example of a value of the 2^{nd}-stage sidelink control information format field in the 1^{st}-stage SCI and a meaning of the value.

**Table 3: 2^{nd}-stage sidelink control information format field in the 1^{st}-stage SCI**

| Field in the 1^{st}-stage SCI | Value | Indicated content |
|---|---|---|
| 2^{nd}-stage SCI format | 00 | SCI format 2-A |
| | 01 | SCI format 2-B |
| | 10 | SCI format 2-C |

The 2^{nd}-stage SCI may be first-format sidelink control information, second-format sidelink control information, or third-format sidelink control information. The first-format sidelink control information is, for example, represented as SCI format 2-A, the second-format sidelink control information is, for example, represented as SCI format 2-B, and the third-format sidelink control information is, for example, represented as SCI format 2-C. When the value of the 2^{nd}-stage sidelink control information format field is "10", the value indicates the third-format sidelink control information SCI format 2-C in the 2^{nd}-stage SCI. The third-format sidelink control information SCI format 2-C indicates that the first information is the trigger information. In other words, the third-format sidelink control information SCI format 2-C indicates that the first information is the trigger information.

In Embodiment 1 of this application, the first indication information indicates the third-format sidelink control information SCI format 2-C, and the third-format sidelink control information SCI format 2-C indicates that the first information is the trigger information. The third-format sidelink control information SCI format 2-C herein is merely an example. In the technical solution in Embodiment 1 of this application, the first indication information may indicate a 2^{nd}-stage SCI format, and the 2^{nd}-stage SCI format can indicate that the first information is the trigger information. A specific format number, a name, and the like in the 2^{nd}-stage SCI are not limited.

Fields included in different sidelink control information formats may be different, and bit lengths of total fields of the different sidelink control information formats may also be different. For example, the 1^{st}-stage SCI shown in Table 1 may be a SCI format. When the 1^{st}-stage SCI has a field different from that of the first SCI shown in Table 1, the 1^{st}-stage SCI may be considered as SCI in another format.

The trigger information may include a parameter of the coordination procedure, and the parameter of the coordination procedure includes at least one of the following information: a number of subchannels, a selection window size, a sensing window size, a period, or priority information. The number of subchannels includes a number of subchannels used for PSCCH/PSCCH transmission, the selection window size includes a length and a start position of a resource selection window, and the sensing window size includes a length and a start position of a resource sensing window. The first sidelink device may recommend a resource to the second sidelink device based on the parameter of the coordination procedure, so as to coordinate the second sidelink device to select a resource.

For content carried in the trigger information, two manners are provided in Embodiment 1 of this application as an example.

### Manner 1:

The trigger information may be carried in the third-format sidelink control information in the 2^{nd}-stage SCI. The first indication information indicates that the 2^{nd}-stage SCI is the third-format sidelink control information SCI format 2-C, and the first sidelink device can learn that the first information is the trigger information. In addition, the first sidelink device may obtain the content of the trigger information from the SCI format 2-C. The trigger information is carried in the SCI format 2-C, so that the first sidelink device can decode the trigger information more quickly, and a location at which the trigger information is carried does not need to be additionally agreed on.

### Manner 2:

The trigger information is carried in the third-format sidelink control information and the 1^{st}-stage sidelink control information.

In Manner 2, a part of the trigger information may be carried in the SCI format 2-C, and another part may be carried in the 1^{st}-stage SCI. For example, the 1^{st}-stage SCI already includes a priority field, and the priority field included in the 1^{st}-stage SCI may indicate priority information in the trigger information. Another parameter in the trigger information may be carried in the SCI format 2-C.

The foregoing two manners may be indicated by a third field in the third-format sidelink control information, and the third field indicates that the trigger information is in the third-format sidelink control information or the trigger information is in the third-format sidelink control information and the 1^{st}-stage sidelink control information. The third field may be an identifier field (flag/identifier field) in the third-format sidelink control information. For example, when a value of the field is 0, it indicates that the trigger information is carried in the 2^{nd}-stage SCI. When a value of the field is 1, it indicates that a part of the trigger information is carried in the 1^{st}-stage SCI, and the remaining part is carried in the 2^{nd}-stage SCI.

In Embodiment 1 of this application, the first indication information may be carried in the reserved field in the 1^{st}-stage SCI, or the 2^{nd}-stage SCI format field. A value of the field indicates that the first information is the trigger information, and the trigger information may be carried in the third-format sidelink control information in the 2^{nd}-stage SCI. After receiving the SCI, the first sidelink device can learn that the first information is the trigger information, and obtain specific content of the trigger information, so as to further coordinate the second sidelink device to select a resource.

FIG. 8 is a flowchart of another communication method according to Embodiment 1 of this application. FIG. 8 shows an example of a case in which a first sidelink device determines, based on first indication information, that first information is coordination information. As shown in FIG. 8, the method includes the following steps.

801: A second sidelink device determines first indication information and first information.

802: The first sidelink device receives the first indication information and the first information that are sent by the second sidelink device.

Specific content of steps 801 and 802 is the same as that of steps 701 and 702, and details are not described herein again.

803: The first sidelink device determines, based on the first indication information, that the first information is coordination information.

The following describes how the first indication information indicates that the first information is the coordination information.

In an implementation, the first indication information is carried in a reserved field in the 1^{st}-stage SCI. Table 4 shows an example of a value of the reserved field in the 1^{st}-stage SCI and a meaning of the value.

**Table 4: Value of the reserved field in the 1^{st}-stage SCI**

| Field in the 1^{st}-stage SCI | Value | Indicated content |
|---|---|---|
| Reserved bits | 01 | SCI format 2-D |

When a value of the reserved field in the 1^{st}-stage SCI is "01", the value indicates a fourth-format sidelink control information SCI format 2-D in the 2^{nd}-stage SCI. The fourth-format sidelink control information SCI format 2-D indicates that the first information is the coordination information. In other words, the fourth-format sidelink control information SCI format 2-D indicates that the first information is the coordination information.

The first indication information may alternatively be carried in a 2^{nd}-stage sidelink control information format field. Table 5 shows an example of a value of the 2^{nd}-stage sidelink control information format field in the 1^{st}-stage SCI and a meaning of the value.

**Table 5: 2^{nd}-stage sidelink control information format field in the 1^{st}-stage SCI**

| Field in the 1^{st}-stage SCI | Value | Indicated content |
|---|---|---|
| 2^{nd}-stage SCI format | 00 | SCI format 2-A |
| | 01 | SCI format 2-B |
| | 11 | SCI format 2-D |

The 2^{nd}-stage SCI may be first-format sidelink control information, second-format sidelink control information, or fourth-format sidelink control information. The first-format sidelink control information is, for example, represented as SCI format 2-A, the second-format sidelink control information is, for example, represented as SCI format 2-B, and the third-format sidelink control information is, for example, represented as SCI format 2-D. When a value of the 2^{nd}-stage sidelink control information format field is "11", the value indicates the fourth-format sidelink control information SCI format 2-D in the 2^{nd}-stage SCI. The fourth-format sidelink control information SCI format 2-D indicates that the first information is the coordination information. In other words, the fourth-format sidelink control information SCI format 2-D indicates that the first information is the coordination information.

In Embodiment 1 of this application, the first indication information indicates the fourth-format sidelink control information SCI format 2-D, and the fourth-format sidelink control information SCI format 2-D indicates that the first information is the coordination information. The fourth-format sidelink control information SCI format 2-D herein is merely an example. In the technical solution in Embodiment 1 of this application, the first indication information may indicate a 2^{nd}-stage SCI format, and the 2^{nd}-stage SCI format can indicate that the first information is the coordination information. A specific format number, a name, and the like in the 2^{nd}-stage SCI are not limited.

For content carried in the coordination information, two manners are also provided in Embodiment 1 of this application as an example.

### Manner 1:

The coordination information may be carried in the fourth-format sidelink control information in the 2^{nd}-stage SCI. The first indication information indicates the fourth-format sidelink control information SCI format 2-D in the 2^{nd}-stage SCI, and the first sidelink device can learn that the first information is the coordination information. In addition, the first sidelink device may obtain content of the coordination information from the SCI format 2-D. The coordination information is carried in the SCI format 2-D, so that the first sidelink device can decode the coordination information more quickly, and a location at which the coordination information is carried does not need to be additionally agreed on.

### Manner 2:

The coordination information is in the fourth-format sidelink control information and the 1^{st}-stage sidelink control information.

In Manner 2, a part of the coordination information may be carried in the SCI format 2-D, and another part may be carried in the 1^{st}-stage SCI.

The foregoing two manners may be indicated by a first field in the fourth-format sidelink control information, and the first field indicates that the coordination information is in the fourth-format sidelink control information or the coordination information is in the fourth-format sidelink control information and the 1^{st}-stage sidelink control information. The first field may be an identifier field (flag field) in the fourth-format sidelink control information. For example, when a value of the field is 0, it indicates that the coordination information is carried in the 2^{nd}-stage SCI. When a value of the field is 1, it indicates that a part of the coordination information is carried in the 1^{st}-stage SCI, and the remaining part is carried in the 2^{nd}-stage SCI.

In the implementation of FIG. 8 in Embodiment 1, the first sidelink device determines, based on the first indication information, that the first information is the coordination information. Further, the first sidelink device may determine, based on second indication information, that the coordination information is trigger mechanism-based coordination information. Alternatively, the first sidelink device may determine, based on second indication information, that the coordination information is non-trigger mechanism-based coordination information. Therefore, the communication method in FIG. 8 in Embodiment 1 further includes the following steps.

804: The first sidelink device receives the second indication information sent by the second sidelink device.

The second indication information may be included in the coordination information. In an optional implementation, the second indication information may be in the fourth-format sidelink control information. The second indication information may be carried in a field in the SCI format 2-D.

805: The first sidelink device may determine, based on the second indication information, that the coordination information is the trigger mechanism-based coordination information, or the first sidelink device may determine, based on the second indication information, that the coordination information is the non-trigger mechanism-based coordination information.

In an implementation, the trigger mechanism-based coordination information or the non-trigger mechanism-based coordination information may be carried in the SCI format 2-D. Because information content of the trigger mechanism-based coordination information may be different from that of the non-trigger mechanism-based coordination information, a total number of bits for representing the trigger mechanism-based coordination information may be different from that for representing the non-trigger mechanism-based coordination information. Therefore, a total number of bits of the SCI format 2-D carrying the trigger mechanism-based coordination information may be different from a total number of bits of the SCI format 2-D carrying the non-trigger mechanism-based coordination information. In this case, when the second sidelink device sends the SCI format 2-D, the total number of bits of the SCI format 2-D carrying the trigger mechanism-based coordination information may be set to be the same as the total number of bits of the SCI format 2-D carrying the non-trigger mechanism-based coordination information, and a setting manner is implemented through zero padding. Zero padding refers to alignment with a larger total number of bits. The identifier field may be set in the SCI format 2-D. The second indication information may be carried in the identifier field in the SCI format 2-D, and whether the coordination information is the trigger-based coordination information or the non-trigger-based coordination information may be determined by using a value of the identifier field. For example, if the value of the identifier field is "0", it indicates that the first information is the trigger mechanism-based coordination information. If the value of the identifier field is "1", it indicates that the first information is the non-trigger mechanism-based coordination information.

In Embodiment 1 of this application, the trigger mechanism-based coordination information includes information about a coordination resource, and the information about the coordination resource indicates the coordination resource. In addition to the information about the coordination resource, the non-trigger mechanism-based coordination information further includes a parameter of the coordination procedure, and the parameter of the coordination procedure includes at least one of the following information: a number of subchannels for PSCCH/PSCCH transmission, a length and a start position of a resource selection window, a length and a start position of a resource sensing window, a period, or priority information.

In Embodiment 1 of this application, for the non-trigger mechanism-based coordination information, because the first sidelink device does not notify, by sending the trigger information, the second sidelink device of a parameter required for coordination resource selection, the coordination information needs to include, in addition to the information about the coordination resource, a parameter used by the second sidelink device for the coordination resource selection, so that the first sidelink device determines availability of a resource recommended by the second sidelink device.

A type of the coordination information can be further determined based on the introduced second indication information, and the first sidelink device can learn, based on the second indication information, whether the currently received coordination information is the trigger mechanism-based coordination information or the non-trigger mechanism-based coordination information. In this way, the type of the coordination procedure is identified to ensure that the coordination resource selection process is successfully completed.

In Embodiment 1 of this application, an unused field in an SCI structure is used for the first indication information, there is no need to define a new field, and an existing design and the reserved field of the 1^{st}-stage SCI can be reused to a maximum extent. The first indication information can indicate whether the first information is the trigger information or the coordination information. When the first indication information is the coordination information, the first indication information may further indicate whether the coordination information is the trigger mechanism-based coordination information or the non-trigger mechanism-based coordination information based on the second indication information. Signaling in a coordination resource selection process is indicated, so that a coordination resource selection mechanism is further improved, signaling identification complexity is reduced. In this embodiment of this application, the coordination procedure may be identified, and/or the trigger information and the coordination information in the coordination procedure may be identified, and/or the trigger mechanism-based coordination information and the non-trigger mechanism-based coordination information may be identified, so that the first sidelink device may serve as both a transmitting terminal and a coordination terminal, and perform corresponding actions in a plurality of coordination procedures, thereby improving efficiency of performing the coordination procedure by the terminal device.

### Embodiment 2

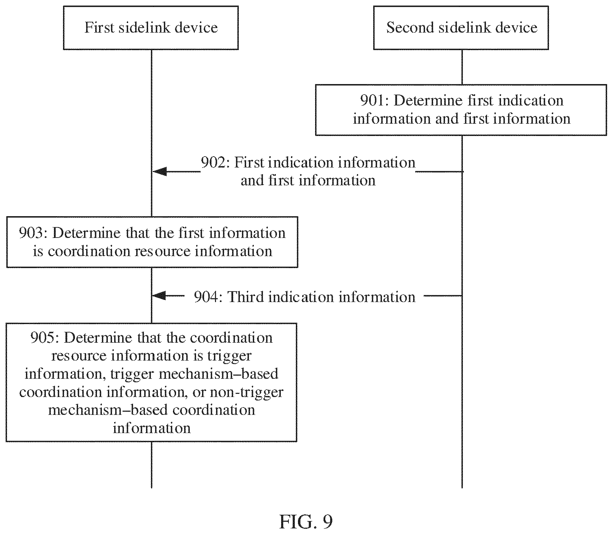

FIG. 9 is a flowchart of a communication method according to Embodiment 2 of this application. An implementation of Embodiment 2 of this application is the meaning 2 described in step 603. Meaning 2: The first sidelink device can determine, based on the received first indication information, that the first information is the trigger information or the coordination information, but cannot determine, based on the first indication information, which one of the trigger information and the coordination information is the first information. In Embodiment 2, third indication information may further be used to determine that the first indication information is one of the trigger information, the trigger mechanism-based coordination information, or the non-trigger mechanism-based coordination information.

As shown in FIG. 9, the method includes the following steps.

901: A second sidelink device determines first indication information and first information. Specific content of step 901 is the same as that of step 701 or step 801, and details are not described herein again.

902: A first sidelink device receives the first indication information and the first information that are sent by the second sidelink device.

Similar to step 702, the first indication information may also be a reserved field in 1^{st}-stage SCI, or the first indication information may be a 2^{nd}-stage sidelink control information format field 2^{nd}-stage SCI format. Other content in step 702 is also applicable to step 902, and details are not described herein again.

903: The first sidelink device determines, based on the first indication information, that the first information is coordination procedure information.

A value of the first indication information may indicate that the first information is the coordination procedure information. When the first indication information is carried in the reserved field, and a value of the reserved field is "00", the first indication information indicates that the first information is the coordination procedure information. When the first indication information is carried in the 2^{nd}-stage sidelink control information format field, and a value of the 2^{nd}-stage sidelink control information format field is "10", the first indication information indicates that the first information is the coordination procedure information.

The following describes how the first indication information indicates that the first information is the coordination procedure information.

In an implementation, the first indication information is carried in a reserved field in the 1^{st}-stage SCI. Similarly, refer to Table 2 in Embodiment 1. A value of the reserved field in the 1^{st}-stage SCI is "00", and the value indicates third-format sidelink control information SCI format 2-C in 2^{nd}-stage SCI. Embodiment 2 differs from Embodiment 1 in that, the third-format sidelink control information SCI format 2-C indicates that the first information is the coordination procedure information. In other words, the third-format sidelink control information SCI format 2-C indicates that the first information is the coordination procedure information.

Alternatively, the first indication information may be carried in the 2^{nd}-stage sidelink control information format field. For details, refer to Table 3 in Embodiment 1. The 2^{nd}-stage SCI may be first-format sidelink control information, second-format sidelink control information, third-format sidelink control information. The first-format sidelink control information is, for example, represented as SCI format 2-A, the second-format sidelink control information is, for example, represented as SCI format 2-B, and the third-format sidelink control information is, for example, represented as SCI format 2-C. When the value of the 2^{nd}-stage sidelink control information format field is "10", the value indicates the third-format sidelink control information SCI format 2-C in the 2^{nd}-stage SCI. Embodiment 2 differs from Embodiment 1 in that, the third-format sidelink control information SCI format 2-C indicates that the first information is the coordination procedure information.

In Embodiment 2 of this application, the first indication information indicates the third-format sidelink control information SCI format 2-C, and the third-format sidelink control information SCI format 2-C indicates that the first information is the coordination procedure information. The third-format sidelink control information SCI format 2-C herein is merely an example. In the technical solution in Embodiment 2 of this application, the first indication information may indicate a 2^{nd}-stage SCI format, and the 2^{nd}-stage SCI format can indicate that the first information is the coordination procedure information. A specific format number, a name, and the like in the 2^{nd}-stage SCI are not limited.

In Embodiment 2 of this application, the coordination procedure information includes the trigger information and the coordination information, and the first sidelink device can learn, based on the first indication information, that the first information is signaling in a coordination resource selection procedure. Specifically, whether the first information is the trigger mechanism-based trigger information, the trigger mechanism-based coordination information or the non-trigger mechanism-based coordination information cannot be directly learned by using the first indication information. Therefore, the communication method shown in FIG. 9 further includes the following step.

904: The first sidelink device receives third indication information sent by the second sidelink device.

The third indication information indicates that the coordination procedure information is one of the trigger information, the trigger mechanism-based coordination information, or the non-trigger mechanism-based coordination information.

The third indication information may be in the sidelink control information. The third indication information may be a field in the third-format sidelink control information SCI format 2-C in the 2^{nd}-stage SCI.

905: The first sidelink device determines, based on the third indication information, that the coordination procedure information is one of the trigger information, the trigger mechanism-based coordination information, or the non-trigger mechanism-based coordination information.

In Embodiment 2 of this application, the third indication information may indicate that the coordination procedure information is the trigger information, and content of the trigger information may also be carried in two manners.

Manner 1: The trigger information may be carried in the third-format sidelink control information SCI format 2-C in the 2^{nd}-stage SCI.

In this case, a value "00" of the reserved field used as the first indication information indicates the third-format sidelink control information SCI format 2-C in the 2^{nd}-stage SCI, and the SCI format 2-C indicates that the first information is the coordination procedure information. The first sidelink device may further identify an identifier field in the SCI format 2-C. When a value of the identifier field is "0", the identifier field indicates that the coordination procedure information is the trigger information, where the trigger information is also carried in the SCI format 2-C. When determining, based on the identifier field in the SCI format 2-C, that the coordination procedure information is the trigger information, the first sidelink device may further decode the SCI format 2-C, so as to obtain content of the trigger information.

Manner 2: A part of the trigger information may be carried in the third-format sidelink control information SCI format 2-C in the 2^{nd}-stage SCI, and another part may be carried in the 1^{st}-stage SCI.

The foregoing two manners may be indicated by a third field in the third-format sidelink control information, and the third field indicates that the trigger information is in the third-format sidelink control information or the trigger information is in the third-format sidelink control information and the 1^{st}-stage sidelink control information.

Content of the trigger information in Embodiment 2 is the same as that in Embodiment 1, and details are not described again.

When the third indication information indicates that the coordination procedure information is the trigger mechanism-based coordination information, the trigger mechanism-based coordination information may also be carried in two manners: Manner 1: The trigger mechanism-based coordination information may be carried in the third-format sidelink control information SCI format 2-C in the 2^{nd}-stage SCI. Manner 2: Apart of the trigger mechanism-based coordination information may be carried in the third-format sidelink control information SCI format 2-C in the 2^{nd}-stage SCI, and another part is carried in the 1^{st}-stage SCI.

When the third indication information indicates that the coordination procedure information is the non-trigger mechanism-based coordination information, the non-trigger mechanism-based coordination information may also be carried in two manners: Manner 1: The non-trigger mechanism-based coordination information may be carried in the third-format sidelink control information SCI format 2-C in the 2^{nd}-stage SCI. Manner 2: A part of the non-trigger mechanism-based coordination information may be carried in the third-format sidelink control information SCI format 2-C in the 2^{nd}-stage SCI, and another part is carried in the 1^{st}-stage SCI.

The foregoing two manners may be indicated by a second field in the third-format sidelink control information, and the second field indicates that the coordination information is in the third-format sidelink control information or the coordination information is in the third-format sidelink control information and the 1^{st}-stage sidelink control information. Content of the trigger mechanism-based coordination information and content of the non-trigger mechanism-based coordination information are the same as those in Embodiment 1, and are not described herein again.

In an implementation, the trigger information, the trigger mechanism-based coordination information, or the non-trigger mechanism-based coordination information may be carried in the SCI format 2-C. Because information content of the trigger mechanism-based coordination information may be different from that of the non-trigger mechanism-based coordination information, a total number of bits for representing the trigger mechanism-based coordination information may be different from that for representing the non-trigger mechanism-based coordination information. Therefore, a total number of bits of the SCI format 2-C carrying the trigger information may be different from a total number of bits of the SCI format 2-C carrying the trigger mechanism-based coordination information, and a total number of bits of the SCI format 2-C carrying the non-trigger mechanism-based coordination information. In this case, when the second sidelink device sends the SCI format 2-C, the total number of bits of the SCI format 2-C carrying the trigger information may be set to be the same as the total number of bits of the SCI format 2-C carrying the trigger mechanism-based coordination information and the total number of bits of the SCI format 2-C carrying the non-trigger mechanism-based coordination information, and a setting manner is implemented through zero padding. Zero padding refers to alignment with a larger total number of bits. The identifier field may be set in the SCI format 2-C. The third indication information may be a field, and may be an identifier field in the third-format sidelink control information SCI format 2-C in the 2^{nd}-stage SCI. Content indicated by the third indication information may be distinguished by using a value of the identifier field. For example, a value of the identifier field may be "0", and in this case, the identifier field indicates that the coordination procedure information is the trigger information. A value of the identifier field may be "1", and in this case, the identifier field indicates that the coordination procedure information is the trigger mechanism-based coordination information. A value of the identifier field may be "2", and in this case, the identifier field indicates that the coordination procedure information is the non-trigger mechanism-based coordination information.

In Embodiment 2 of this application, it can be determined, based on the first indication information, that the first information is the coordination procedure information, and it can be determined based on the third indication information that the first information is the trigger information, the trigger mechanism-based coordination information, or the non-trigger mechanism-based coordination information. In this embodiment of this application, the coordination procedure may be identified, and/or the trigger information and the coordination information in the coordination procedure may be identified, and/or the trigger mechanism-based coordination information and the non-trigger mechanism-based coordination information may be identified, so that the first sidelink device may serve as both a transmitting terminal and a coordination terminal, and perform corresponding actions in a plurality of coordination procedures, thereby improving efficiency of performing the coordination procedure by the terminal device.

The first indication information may be in the reserved field in the 1^{st}-stage SCI, or the 2^{nd}-stage SCI format field, and the third indication information may be in the identifier field in the third-format sidelink control information in the 2^{nd}-stage SCI. The trigger information, the trigger mechanism-based coordination information, or the non-trigger mechanism-based coordination information may also be carried in the third-format sidelink control information in the 2^{nd}-stage SCI. In this embodiment of this application, an unused field in an original SCI structure is used for the first indication information, there is no need to define a new field, and an existing design and the reserved field of the 1^{st}-stage SCI can be reused to a maximum extent. In addition, the coordination procedure information is carried in a manner of defining a new format in the 2^{nd}-stage SCI. The coordination procedure information, the first indication information, and the third indication information can be sent by using SCI signaling.

### Embodiment 3

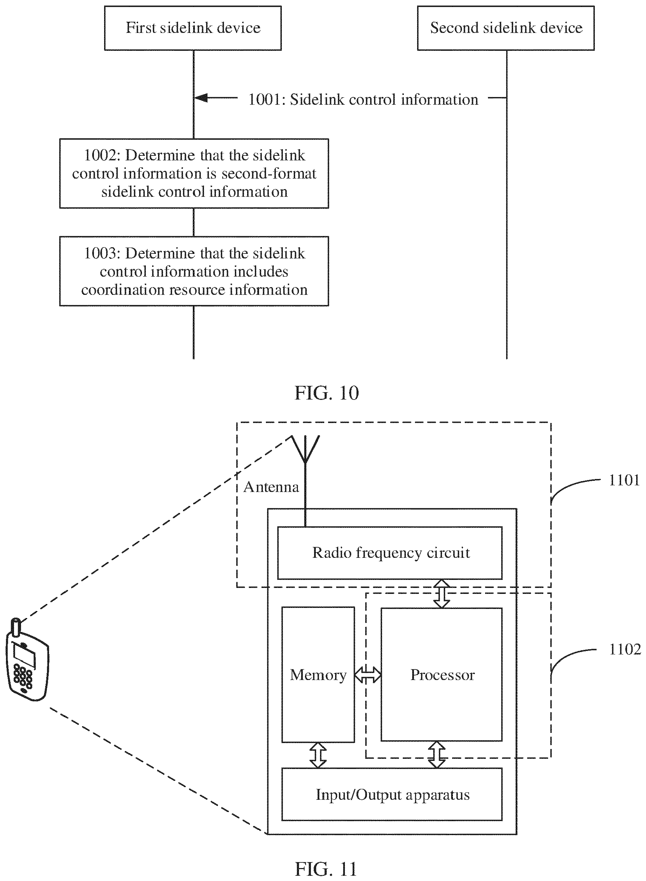

FIG. 10 is a flowchart of a communication method according to Embodiment 3 of this application. In Embodiment 3 of this application, a first sidelink device receives sidelink control information, determines that the sidelink control information is second-format sidelink control information, and can determine, based on the second-format sidelink control information, that the sidelink control information includes coordination procedure information.

Refer to FIG. 10. The method provided in Embodiment 3 of this application includes the following steps.

1001: A first sidelink device receives sidelink control information sent by a second sidelink device.

The sidelink control information includes sidelink scheduling information or indication information necessary for sidelink transmission, for example, indication information of a time-frequency resource block used during transmission, a modulation and coding scheme, a source identifier ID, and a target identifier ID. The first sidelink device receives the sidelink control information sent by the second sidelink device. The sidelink control information may be determined by the second sidelink device.

1002: Determine that the sidelink control information is second-format sidelink control information.

The first sidelink device identifies the received SCI, and determines that the SCI is the second-format sidelink control information.

The following describes the second-format sidelink control information in Embodiment 3 of this application.

The SCI may transmit different messages in different formats. For example, the SCI may be first-format SCI. A message transmitted by using the first-format SCI may be the content shown in Table 1 in Embodiment 1 of this application. The first-format SCI includes but is not limited to:
RA: a frequency field, indicating frequency domain information of RA. RA: a time field, indicating time domain information of RA. Period field, indicating period information of resource allocation. MCS field, indicating a modulation and coding scheme. Reserved bits: a reserved field. 2^{nd}-stage SCI format field, indicating a second-stage SCI format.

The second format in Embodiment 3 of this application may be any other format different from the first format.

1003: Determine, based on the second-format sidelink control information, that the sidelink control information includes coordination procedure information, where the coordination procedure information includes trigger information or coordination information, the trigger information triggers a coordination procedure, and the coordination information includes information about a coordination resource.

When the first sidelink device identifies that the SCI is the second-format sidelink control information, the first sidelink device can determine that information carried in the SCI includes the coordination procedure information.

Similar to Embodiment 2 of this application, the first sidelink device can determine that the information carried in the SCI is the coordination procedure information, and does not distinguish whether the coordination procedure information is the trigger information or the coordination information.

In Embodiment 3 of this application, a new format is added to the SCI to identify the coordination procedure information, so that signaling overheads in a coordination mechanism are reduced, and transmission of an unrelated field is avoided.

The trigger information in Embodiment 3 of this application triggers the first sidelink device to coordinate the second sidelink device to select a resource. The coordination information includes the information about the coordination resource, and the information about the coordination resource is used by the second sidelink device to coordinate the first sidelink device to select a resource.

The following describes in detail Embodiment 3 of this application with reference to an optional implementation.

In step 1001, the sidelink control information may include 1^{st}-stage sidelink control information and/or 2^{nd}-stage sidelink control information which may be respectively written as 1^{st}-stage SCI and 2^{nd}-stage SCI. The 1^{st}-stage SCI and the 2^{nd}-stage SCI may be sent in two phases. The 1^{st}-stage SCI is carried on a physical sidelink control channel PSCCH, and includes information used for sensing and information about PSSCH resource allocation. The second-stage SCI carries information required for identifying and/or decoding an associated sidelink shared channel SL-SCH, indication information of a hybrid automatic repeat request HARQ, trigger information for channel state information CSI feedback, and the like.

In step 1002, the determining that the sidelink control information is second-format sidelink control information includes: determining that the 1^{st}-stage sidelink control information is the second-format sidelink control information.

The first sidelink device identifies the received 1^{st}-stage SCI, and determines that the 1^{st}-stage SCI is the second-format sidelink control information. The first sidelink device determines, based on the second-format sidelink control information, that the 1^{st}-stage SCI includes the coordination procedure information.

The 1^{st}-stage SCI may transmit different messages in different formats. For example, the 1^{st}-stage SCI may be first-format SCI, and the first format is, for example, an SCI format 1-A defined in a 3GPP standard. A message transmitted in the SCI format 1-A may be the content shown in Table 1 in Embodiment 1 of this application.

The second format in Embodiment 3 of this application may be any other format different from the first format. For example, the second-format sidelink control information may be written as SCI format 1-B.

In an optional implementation, the first sidelink control information may determine, in three manners, that the 1^{st}-stage SCI uses the second format.

### Manner 1:

If a total number of bits of the SCI format 1 -B is inconsistent with that of the SCI format 1 -A, the SCI format 1-B may be identified in a blind detection manner. The terminal device separately detects SCI of different sizes. If SCI having a same size as the SCI format 1-B is successfully decoded, it may be determined that the currently received SCI is the SCI format 1-B.

### Manner 2:

The SCI format 1-A and the SCI format 1-B may alternatively be distinguished by scrambling a cyclic redundancy code (Cyclic Redundancy Check, CRC) by using different radio network temporary identifiers (Radio Network Temporary Identifiers, RNTIs). For example, when the CRC is scrambled by using an RNTI-1A, it indicates an existing SCI format 1-A; and when the CRC is scrambled by using an RNTI-1B, it indicates a newly added SCI format 1-B.

### Manner 3:

The SCI format 1-A and the SCI format 1-B are aligned according to the one that has a larger total number of bits in the SCI format 1-A and the SCI format 1-B. For example, when the total number of bits included in the SCI format 1-A is greater than the total number of bits included in the SCI format 1-B, zeros are padded starting from the last bit included in the SCI format 1-B, until the total number of bits included in the SCI format 1 -B is equal to the total number of bits included in the SCI format 1-B. The SCI format 1-A and the SCI format 1-B may be distinguished by using an identifier field (identifier field-1). For example, when a value of the field is 0, it indicates the existing SCI format 1-A; or when a value of the field is 1, it indicates the existing SCI format 1-B.

In step 1003, when the first sidelink device identifies that the 1^{st}-stage SCI is the SCI format 1-B, the first sidelink device can determine that information carried in the 1^{st}-stage SCI includes the coordination procedure information.

The SCI format 1-B may include a first field, where the first field is used to determine that the coordination procedure information is one of the trigger information, trigger mechanism-based coordination information, or non-trigger mechanism-based coordination information.

In Embodiment 3 of this application, it is determined that the 1^{st}-stage sidelink control information is the second-format sidelink control information, and it is determined, based on the second-format sidelink control information, that the 1^{st}-stage sidelink control information includes the coordination procedure information. The coordination procedure information includes the trigger information, the trigger mechanism-based coordination information, or the non-trigger mechanism-based coordination information. In this case, the trigger information, the trigger mechanism-based coordination information, or the non-trigger mechanism-based coordination information is carried in the SCI format 2-B. Because information content of the trigger mechanism-based coordination information may be different from that of the non-trigger mechanism-based coordination information, a total number of bits for representing the trigger mechanism-based coordination information may be different from that for representing the non-trigger mechanism-based coordination information. Therefore, a total number of bits of the SCI format 2-B carrying the trigger information may be different from a total number of bits of the SCI format 2-B carrying the trigger mechanism-based coordination information, and a total number of bits of the SCI format 2-B carrying the non-trigger mechanism-based coordination information. In this case, when the second sidelink device sends the SCI format 2-B, the total number of bits of the SCI format 2-B carrying the trigger information may be set to be the same as the total number of bits of the SCI format 2-B carrying the trigger mechanism-based coordination information and the total number of bits of the SCI format 2-B carrying the non-trigger mechanism-based coordination information, and a setting manner is implemented through zero padding. Zero padding refers to alignment with a larger total number of bits. The identifier field may be set in the SCI format 2-B. An identifier field in the second-format SCI format 1-B in the 1^{st}-stage SCI may be used as the first field. For example, when a value of the identifier field in the SCI format 1-B is "0", the identifier field indicates that the coordination procedure information is the trigger information. When a value of the identifier field in the SCI format 1-B is "1", the identifier field indicates that the coordination procedure information is the trigger mechanism-based coordination information. When a value of the identifier field in the SCI format 1-B is "2", the identifier field indicates that the coordination procedure information is the non-trigger mechanism-based coordination information.

Based on the foregoing content, a procedure of obtaining the trigger information or the coordination information in this embodiment of this application is as follows: The first sidelink device detects the second-format SCI format 1-B in the 1^{st}-stage SCI, and the SCI format 1-B indicates that the first information is the coordination procedure information. The first sidelink device may further identify the identifier field in the SCI format 1 -B. When a value of the identifier field is "0", the identifier field indicates that the coordination procedure information is the trigger information. Content of the trigger information may be obtained by further decoding the SCI format 1 -B. When a value of the identifier field is "1", the identifier field indicates that the coordination procedure information is the trigger mechanism-based coordination information. Content of the trigger mechanism-based coordination information may be obtained by further decoding the SCI format 1-B. When a value of the identifier field is "1", the identifier field indicates that the coordination procedure information is the non-trigger mechanism-based coordination information. Content of the non-trigger mechanism-based coordination information may be obtained by further decoding the SCI format 1-B.

Content of the trigger information, content of the trigger mechanism-coordination information, and content of the non-trigger mechanism-based coordination information in Embodiment 3 are the same as those in Embodiment 1 or Embodiment 2, and are not described herein again.

In Embodiment 3 of this application, new-format 1^{st}-stage SCI is set. When the first sidelink device detects the second format in the 1^{st}-stage SCI, the first sidelink device can determine that the 1^{st}-stage SCI includes the coordination procedure information. Further, it may be determined, based on the first field in the second-format SCI, that the coordination procedure information is the trigger information, the trigger mechanism-based coordination information, or the non-trigger mechanism-based coordination information. The first field may be an identifier field in the second format in the 1^{st}-stage SCI. In Embodiment 3 of this application, signaling overheads in a coordination mechanism are reduced by introducing new 1^{st}-stage SCI, and transmission of an unrelated field is avoided. In addition, because the identifier field is introduced, a format of the coordination information is unified, so that blind detection complexity is reduced.

In this embodiment of this application, the coordination procedure may be identified, and/or the trigger information and the coordination information in the coordination procedure may be identified, and/or the trigger mechanism-based coordination information and the non-trigger mechanism-based coordination information may be identified, so that the first sidelink device may serve as both a transmitting terminal and a coordination terminal, and perform corresponding actions in a plurality of coordination procedures, thereby improving efficiency of performing the coordination procedure by the terminal device.

The communication methods in embodiments of this application are described above, and communication apparatuses in embodiments of this application are described below. For example, the apparatuses may use the methods shown in Embodiment 1, Embodiment 2, and Embodiment 3. The method and the apparatus are based on a same technical idea. The method and the apparatus have similar principles for resolving problems. Therefore, for implementations of the apparatus and the method, refer to each other, and details of repeated parts are not described again.

An embodiment of this application provides a communication apparatus. The communication apparatus includes a transceiver module, configured to receive first indication information and first information; and a processing module, configured to determine, based on the first indication information, that the first information is coordination procedure information. The coordination procedure information is information used in a coordination procedure, and the coordination procedure is a procedure in which one sidelink device coordinates another sidelink device to select a resource. The coordination procedure may include a trigger mechanism-based coordination procedure and a non-trigger mechanism-based coordination procedure. The coordination procedure information includes trigger information or coordination information, the trigger information triggers the coordination procedure, and the coordination information includes information about a coordination resource.

The communication apparatus provided in this embodiment of this application indicates the first information by using the first indication information, so that the first information can be identified, and the first information can be determined as the coordination procedure information based on the first indication information, to perform a coordination resource selection procedure. Signaling in a coordination resource selection process is indicated, so that a coordination resource selection mechanism is further improved, signaling identification complexity is reduced, and a coordination procedure is optimized.

The communication apparatus provided in this embodiment may be further configured to perform the method in any possible implementation of the method embodiments. For specific content, refer to some content about an action performed by the terminal device in the method embodiments. Details are not described herein again.

An embodiment of this application further provides a communication apparatus. The communication apparatus includes a transceiver module, configured to receive sidelink control information; and a processing module, configured to determine that the sidelink control information is second-format sidelink control information. The processing module is further configured to determine, based on the second-format sidelink control information, that the sidelink control information includes coordination procedure information, where the coordination procedure information is information used in a coordination procedure. The coordination procedure is a procedure in which one sidelink device coordinates another sidelink device to select a resource. The coordination procedure may include a trigger mechanism-based coordination procedure and a non-trigger mechanism-based coordination procedure. The coordination procedure information includes trigger information or coordination information. The trigger information triggers the coordination procedure, and the coordination information includes information about a coordination resource.

According to the communication apparatus in this embodiment of this application, new-format sidelink control information is set, and when the second-format sidelink control information is detected, it can be determined that the sidelink control information includes the coordination procedure information. It can be indicated, without using the indication information, that the sidelink control information includes the coordination procedure information, so that signaling overheads are reduced.

An embodiment of this application further provides a communication apparatus. The communication apparatus includes a processing module, configured to determine first indication information and first information; and a transceiver module, configured to send the first indication information and the first information. The first indication information is used to determine that the first information is coordination procedure information. The coordination procedure information is information used in a coordination procedure, and the coordination procedure is a procedure in which one sidelink device coordinates another sidelink device to select a resource. The coordination procedure may include a trigger mechanism-based coordination procedure and a non-trigger mechanism-based coordination procedure. The coordination procedure information includes trigger information or coordination information, the trigger information triggers the coordination procedure, and the coordination information includes information about a coordination resource.

In this embodiment of this application, the first information is indicated by using the first indication information, so that the first information can be identified, and the first information can be determined as the coordination procedure information based on the first indication information, to perform a coordination resource selection procedure. Signaling in a coordination resource selection process is indicated, so that a coordination resource selection mechanism is further improved, signaling identification complexity is reduced, and a coordination procedure is optimized.

An embodiment of this application further provides a communication apparatus. The communication apparatus includes a processing module, configured to determine sidelink control information, and a transceiver module, configured to send the sidelink control information. The sidelink control information is second-format sidelink control information. The second-format sidelink control information indicates that the sidelink control information includes coordination procedure information, and the coordination procedure information is information used in a coordination procedure. The coordination procedure is a procedure in which one sidelink device coordinates another sidelink device to select a resource. The coordination procedure may include a trigger mechanism-based coordination procedure and a non-trigger mechanism-based coordination procedure. The coordination procedure information includes trigger information or coordination information. The trigger information triggers the coordination procedure, and the coordination information includes information about a coordination resource.

In this embodiment of this application, new-format sidelink control information is set. The sidelink control information is the second-format sidelink control information, and the second-format sidelink control information can indicate that the sidelink control information includes the coordination procedure information. It can be indicated, without using the indication information, that the sidelink control information includes the coordination procedure information, so that signaling overheads are reduced.

FIG. 11 is a simplified schematic structural diagram of a communication apparatus. As shown in FIG. 11, the communication apparatus may be a terminal device. In this embodiment of this application, both a first sidelink device and a second sidelink device may be terminal devices. The terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 11 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device. As shown in FIG. 11, the terminal device includes a transceiver module 1101 and a processing module 1102. The transceiver module may also be referred to as a transceiver, a transceiver machine, a transceiver apparatus, or the like. The processing module may also be referred to as a processor, a processing board, a processing apparatus, or the like. Optionally, a component for implementing the receiving function in the transceiver module 1101 may be considered as a receiving module, and a component for implementing the sending function in the transceiver module 1101 may be considered as a sending module. That is, the transceiver module 1101 includes the receiving module and the sending module. The transceiver module may also be sometimes referred to as a transceiver machine, a transceiver, a transceiver circuit, or the like. The receiving module may also be sometimes referred to as a receiver machine, a receiver, a receive circuit, or the like. The sending module may also be sometimes referred to as a transmitter machine, a transmitter, a transmit circuit, or the like.

It should be understood that the transceiver module 1101 is configured to perform a sending operation and a receiving operation of the terminal device in the foregoing method embodiments, and the processing module 1102 is configured to perform an operation other than the sending operation and the receiving operation of the terminal device in the foregoing method embodiments. In this embodiment of this application, both the first sidelink device and the second sidelink device may be terminal devices.

When the communication apparatus is a chip apparatus or circuit, the chip apparatus may include a transceiver module and a processing module. The transceiver module may be an input/output circuit and/or a communications interface. The processing module is an integrated processor or microprocessor, or an integrated circuit on the chip.

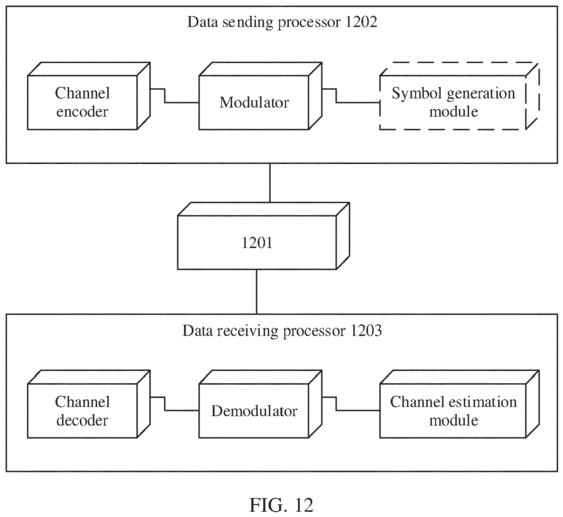

The terminal device in this embodiment may also be a device shown in FIG. 12. In FIG. 12, the device includes a processor 1201, a data sending processor 1202, and a data receiving processor 1203. The processing module in the foregoing embodiment may be the processor 1201 in FIG. 12, and completes a corresponding function. The transceiver module in the foregoing embodiment may be the data sending processor 1202 and/or the data receiving processor 1203 in FIG. 12. Although FIG. 12 shows a channel encoder and a channel decoder, it may be understood that the modules are merely examples, and do not constitute a limitation on this embodiment.

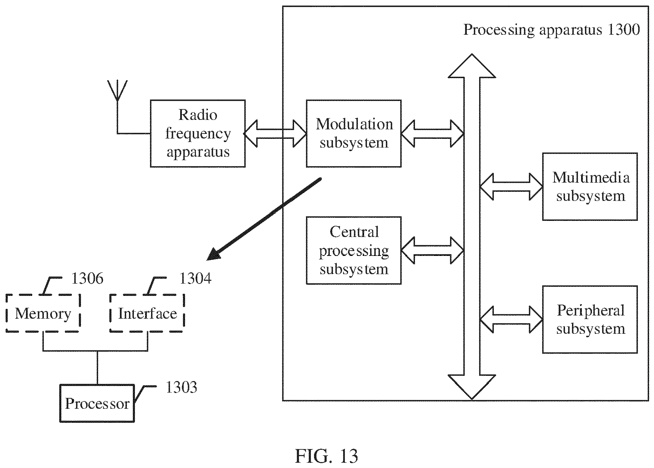

FIG. 13 shows another form of this embodiment. A processing apparatus 1300 includes modules such as a modulation subsystem, a central processing subsystem, and a peripheral subsystem. The communication apparatus in this embodiment may be used as the modulation subsystem. Specifically, the modulation subsystem may include a processor 1303 and an interface 1304. The processor 1303 completes the functions of the processing module, and the interface 1304 completes the functions of the transceiver module. In another variation, the modulation subsystem includes a memory 1306, a processor 1303, and a program that is stored in the memory 1306 and that can be run on the processor. When executing the program, the processor 1303 implements the method on the terminal device side in the foregoing method embodiments. It should be noted that the memory 1306 may be a non-volatile memory or a volatile memory. The memory 1306 may be located in the modulation subsystem, or may be located in the processing apparatus 1300, provided that the memory 1306 can be connected to the processor 1303.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first indication information and first information; and
determining, based on the first indication information, that the first information is coordination procedure information, wherein
the coordination procedure information comprises trigger information or coordination information, the trigger information triggers a coordination procedure, and the coordination information comprises information about a coordination resource.

2. The method according to claim 1, wherein
the receiving first indication information and first information comprises: receiving, by a first sidelink device, the first indication information and the first information that are sent by a second sidelink device.

3. The method according to claim 2, wherein
that the trigger information triggers a coordination procedure comprises: the trigger information triggers the first sidelink device to coordinate the second sidelink device to select a resource.

4. The method according to claim 2 or 3, wherein
the information about the coordination resource is determined by the second sidelink device.

5. The method according to any one of claims 2 to 4, wherein
the coordination resource is used to coordinate the first sidelink device to select a resource.

6. The method according to any one of claims 1 to 5, wherein
the coordination information is trigger mechanism-based coordination information or non-trigger mechanism-based coordination information.

7. The method according to any one of claims 1 to 6, wherein
the determining, based on the first indication information, that the first information is coordination procedure information comprises: determining, based on the first indication information, that the coordination procedure information is the trigger information or the coordination information.

8. The method according to claim 7, wherein the method further comprises:
receiving sidelink control information, wherein the sidelink control information comprises 1^{st}-stage sidelink control information and 2^{nd}-stage sidelink control information; and
the first indication information indicates that the 2^{nd}-stage sidelink control information is third-format sidelink control information, and the third-format sidelink control information indicates that the first information is the trigger information; or
the first indication information indicates that the 2^{nd}-stage sidelink control information is fourth-format sidelink control information, and the fourth-format sidelink control information indicates that the first information is the coordination information.

9. The method according to claim 7 or 8, wherein
the determining, based on the first indication information, that the coordination procedure information is the trigger information or the coordination information comprises: determining, based on the first indication information, that the coordination procedure information is the coordination information; and
the method further comprises: receiving second indication information, wherein the second indication information indicates that the coordination information is the trigger mechanism-based coordination information or the coordination information is the non-trigger mechanism-based coordination information.

10. The method according to claim 9, wherein
the coordination information comprises the second indication information.

11. The method according to claim 9 or 10, wherein the method further comprises:
receiving sidelink control information, wherein the sidelink control information comprises 1^{st}-stage sidelink control information and 2^{nd}-stage sidelink control information; and
the 2^{nd}-stage sidelink control information is fourth-format sidelink control information, and the second indication information is carried in a field in the fourth-format sidelink control information.

12. The method according to any one of claims 7 to 11, wherein
receiving sidelink control information, wherein the sidelink control information comprises 1^{st}-stage sidelink control information and 2^{nd}-stage sidelink control information, and the 2^{nd}-stage sidelink control information is fourth-format sidelink control information; and
the coordination information is in the fourth-format sidelink control information; or
the coordination information is in the fourth-format sidelink control information and the 1^{st}-stage sidelink control information.

13. The method according to claim 12, wherein
the fourth-format sidelink control information comprises a first field, and the first field indicates that the coordination information is in the fourth-format sidelink control information or the coordination information is in the fourth-format sidelink control information and the 1^{st}-stage sidelink control information.

14. The method according to any one of claims 1 to 6, wherein the method further comprises:
receiving sidelink control information, wherein the sidelink control information comprises 1^{st}-stage sidelink control information and 2^{nd}-stage sidelink control information, and the 2^{nd}-stage sidelink control information is third-format sidelink control information; and
the first indication information indicates the third-format sidelink control information, and the third-format sidelink control information indicates that the first information is the coordination procedure information.

15. The method according to claim 6, wherein the method further comprises:
receiving third indication information, wherein the third indication information indicates that the coordination procedure information is one of the trigger information, the trigger mechanism-based coordination information, or the non-trigger mechanism-based coordination information.

16. The method according to claim 15, wherein the method further comprises:
receiving sidelink control information, wherein the sidelink control information comprises 1^{st}-stage sidelink control information and 2^{nd}-stage sidelink control information; and
the 2^{nd}-stage sidelink control information is third-format sidelink control information, and the third indication information is carried in a field in the third-format sidelink control information.

17. The method according to any one of claims 14 to 16, wherein the method further comprises:
receiving sidelink control information, wherein the sidelink control information comprises 1^{st}-stage sidelink control information and 2^{nd}-stage sidelink control information, and the 2^{nd}-stage sidelink control information is third-format sidelink control information; and
the coordination information is in the third-format sidelink control information; or
the coordination information is in the third-format sidelink control information and the 1^{st}-stage sidelink control information.

18. The method according to claim 17, wherein
the third-format sidelink control information comprises a second field, and the second field indicates that the coordination information is in the third-format sidelink control information or the coordination information is in the third-format sidelink control information and the 1^{st}-stage sidelink control information.

19. The method according to any one of claims 1 to 18, wherein the method further comprises:
receiving sidelink control information, wherein the sidelink control information comprises 1^{st}-stage sidelink control information and 2^{nd}-stage sidelink control information; and
the first indication information is carried in a reserved field in the 1^{st}-stage sidelink control information or a 2^{nd}-stage sidelink control information format field in the 1^{st}-stage sidelink control information.

20. The method according to any one of claims 1 to 19, wherein the method further comprises:
receiving sidelink control information, wherein the sidelink control information comprises 1^{st}-stage sidelink control information and 2^{nd}-stage sidelink control information, and the 2^{nd}-stage sidelink control information is third-format sidelink control information; and
the trigger information is in the third-format sidelink control information; or
the trigger information is in the third-format sidelink control information and the 1^{st}-stage sidelink control information.

21. The method according to claim 20, wherein
the third-format sidelink control information comprises a third field, and the third field indicates that the trigger information is in the third-format sidelink control information or the trigger information is in the third-format sidelink control information and the 1^{st}-stage sidelink control information.

22. The method according to any one of claims 1 to 21, wherein
the trigger information comprises a parameter of the coordination procedure, and the parameter of the coordination procedure comprises at least one of the following information:
a number of subchannels, a selection window size, a sensing window size, a period, or priority information.

23. The method according to claim 6, wherein
the non-trigger mechanism-based coordination information comprises the information about the coordination resource and a parameter of the coordination procedure; and
the parameter of the coordination procedure comprises at least one of the following information: a number of subchannels, a selection window size, a sensing window size, a period, or priority information.

24. A communication method, comprising:
receiving sidelink control information;
determining that the sidelink control information is second-format sidelink control information; and
determining, based on the second-format sidelink control information, that the sidelink control information comprises coordination procedure information, wherein the coordination procedure information comprises trigger information or coordination information, the trigger information triggers a coordination procedure, and the coordination information comprises information about a coordination resource.

25. The method according to claim 24, wherein
the sidelink control information comprises 1^{st}-stage sidelink control information and/or 2^{nd}-stage sidelink control information; and
the determining that the sidelink control information is second-format sidelink control information comprises: determining that the 1^{st}-stage sidelink control information is the second-format sidelink control information.

26. The method according to claim 24 or 25, wherein
the receiving sidelink control information comprises: receiving, by a first sidelink device, the sidelink control information sent by a second sidelink device.

27. The method according to claim 26, wherein
that the trigger information triggers a coordination procedure comprises: the trigger information triggers the first sidelink device to coordinate the second sidelink device to select a resource.

28. The method according to claim 26 or 27, wherein
the information about the coordination resource is used to coordinate the first sidelink device to select a resource.

29. The method according to any one of claims 24 to 28, wherein
the coordination information is trigger mechanism-based coordination information or non-trigger mechanism-based coordination information.

30. The method according to claim 29, wherein
the second-format sidelink control information comprises a first field, and the first field is used to determine that the coordination procedure information is one of the trigger information, the trigger mechanism-based coordination information, or the non-trigger mechanism-based coordination information.

31. The method according to claim 29 or 30, wherein
the non-trigger mechanism-based coordination information comprises the information about the coordination resource and a parameter of the coordination procedure; and
the parameter of the coordination procedure comprises at least one of the following information: a number of subchannels, a selection window size, a sensing window size, a period, or priority information.

32. The method according to any one of claims 24 to 31, wherein
the trigger information comprises a parameter of the coordination procedure, and the parameter of the coordination procedure comprises at least one of the following information:
a number of subchannels, a selection window size, a sensing window size, a period, or priority information.

33. A communication method, comprising:
determining first indication information and first information; and
sending the first indication information and the first information, wherein the first indication information is used to determine that the first information is coordination procedure information, wherein
the coordination procedure information comprises trigger information or coordination information, the trigger information triggers a coordination procedure, and the coordination information comprises information about a coordination resource.

34. The method according to claim 33, wherein
the sending the first indication information and the first information comprises: sending, by a second sidelink device, the first indication information and the first information to a first sidelink device.

35. The method according to claim 34, wherein
that the trigger information triggers a coordination procedure comprises: the trigger information triggers the first sidelink device to coordinate the second sidelink device to select a resource.

36. The method according to claim 34 or 35, wherein
the information about the coordination resource is determined by the second sidelink device.

37. The method according to any one of claims 34 to 36, wherein
the coordination resource is used to coordinate the first sidelink device to select a resource.

38. The method according to any one of claims 33 to 37, wherein
the coordination information is trigger mechanism-based coordination information or non-trigger mechanism-based coordination information.

39. The method according to any one of claims 33 to 38, wherein
that the first indication information is used to determine that the first information is coordination procedure information comprises: the first indication information is used to determine that the coordination procedure information is the trigger information or the coordination information.

40. The method according to claim 39, wherein the method further comprises:
sending sidelink control information, wherein the sidelink control information comprises 1^{st}-stage sidelink control information and 2^{nd}-stage sidelink control information; and
the first indication information indicates that the 2^{nd}-stage sidelink control information is third-format sidelink control information, and the third-format sidelink control information indicates that the first information is the trigger information; or
the first indication information indicates that the 2^{nd}-stage sidelink control information is fourth-format sidelink control information, and the fourth-format sidelink control information indicates that the first information is the coordination information.

41. The method according to claim 39 or 40, wherein
that the first indication information is used to determine that the coordination procedure information is the trigger information or the coordination information comprises: the first indication information is used to determine that the coordination procedure information is the coordination information, and the method further comprises:
sending second indication information, wherein the second indication information indicates that the coordination information is the trigger mechanism-based coordination information or the coordination information is the non-trigger mechanism-based coordination information.

42. The method according to claim 41, wherein
the coordination information comprises the second indication information.

43. The method according to claim 41 or 42, wherein the method further comprises:
sending sidelink control information, wherein the sidelink control information comprises 1^{st}-stage sidelink control information and 2^{nd}-stage sidelink control information; and
the 2^{nd}-stage sidelink control information is fourth-format sidelink control information, and the second indication information is carried in a field in the fourth-format sidelink control information.

44. The method according to any one of claims 39 to 43, wherein
sending sidelink control information, wherein the sidelink control information comprises 1^{st}-stage sidelink control information and 2^{nd}-stage sidelink control information, and the 2^{nd}-stage sidelink control information is the fourth-format sidelink control information; and
the coordination information is in the fourth-format sidelink control information; or
the coordination information is in the fourth-format sidelink control information and the 1^{st}-stage sidelink control information.

45. The method according to claim 44, wherein
the fourth-format sidelink control information comprises a first field, and the first field indicates that the coordination information is in the fourth-format sidelink control information or the coordination information is in the fourth-format sidelink control information and the 1^{st}-stage sidelink control information.

46. The method according to any one of claims 33 to 38, wherein the method further comprises:
sending sidelink control information, wherein the sidelink control information comprises 1^{st}-stage sidelink control information and 2^{nd}-stage sidelink control information; and
the first indication information indicates that the 2^{nd}-stage sidelink control information is third-format sidelink control information, and the third-format sidelink control information indicates that the first information is the coordination procedure information.

47. The method according to claim 38, wherein the method further comprises:
sending third indication information, wherein the third indication information indicates that the coordination procedure information is one of the trigger information, the trigger mechanism-based coordination information, or the non-trigger mechanism-based coordination information.

48. The method according to claim 47, wherein the method further comprises:
receiving sidelink control information, wherein the sidelink control information comprises 1^{st}-stage sidelink control information and 2^{nd}-stage sidelink control information;
the 2^{nd}-stage sidelink control information is third-format sidelink control information, and the third indication information is carried in a field in the third-format sidelink control information.

49. The method according to any one of claims 46 to 48, wherein the method further comprises:
sending sidelink control information, wherein the side link control information comprises 1^{st}-stage sidelink control information and 2^{nd}-stage sidelink control information, and the 2^{nd}-stage sidelink control information is third-format sidelink control information; and
the coordination information is in the third-format sidelink control information; or
the coordination information is in the third-format sidelink control information and the 1^{st}-stage sidelink control information.

50. The method according to claim 49, wherein
the third-format sidelink control information comprises a second field, and the second field indicates that the coordination information is in the third-format sidelink control information or the coordination information is in the third-format sidelink control information and the 1^{st}-stage sidelink control information.

51. The method according to any one of claims 33 to 50, wherein the method further comprises:
receiving sidelink control information, wherein the sidelink control information comprises 1^{st}-stage sidelink control information and 2^{nd}-stage sidelink control information; and
the first indication information is carried in a reserved field in the 1^{st}-stage sidelink control information or a 2^{nd}-stage sidelink control information format field in the 1^{st}-stage sidelink control information.

52. The method according to any one of claims 33 to 51, wherein the method further comprises:
sending sidelink control information, wherein the sidelink control information comprises 1^{st}-stage sidelink control information and 2^{nd}-stage sidelink control information, and the 2^{nd}-stage sidelink control information is third-format sidelink control information; and
the trigger information is in the third-format sidelink control information; or
the trigger information is in the third-format sidelink control information and the 1^{st}-stage sidelink control information.

53. The method according to claim 52, wherein
the third-format sidelink control information comprises a first field, and the first field indicates that the trigger information is in the third-format sidelink control information or the trigger information is in the third-format sidelink control information and the 1^{st}-stage sidelink control information.

54. The method according to any one of claims 33 to 53, wherein
the trigger information comprises a parameter of the coordination procedure, and the parameter of the coordination procedure comprises at least one of the following information:
a number of subchannels, a selection window size, a sensing window size, a period, or priority information.

55. The method according to claim 38, wherein
the non-trigger mechanism-based coordination information comprises the information about the coordination resource and a parameter of the coordination procedure; and
the parameter of the coordination procedure comprises at least one of the following information: a number of subchannels, a selection window size, a sensing window size, a period, or priority information.

56. A communication method, comprising:
determining sidelink control information; and
sending the sidelink control information, wherein
the sidelink control information is second-format sidelink control information; and
the second-format sidelink control information indicates that the sidelink control information comprises coordination procedure information, the coordination procedure information comprises trigger information or coordination information, the trigger information triggers a coordination procedure, and the coordination information comprises information about a coordination resource.

57. The method according to claim 56, wherein
the sidelink control information comprises 1^{st}-stage sidelink control information and/or 2^{nd}-stage sidelink control information; and
that the sidelink control information is second-format sidelink control information comprises: the 1^{st}-stage sidelink control information is the second-format sidelink control information.

58. The method according to claim 56 or 57, wherein
the sending the sidelink control information comprises: sending, by a second sidelink device, the sidelink control information to a first sidelink device.

59. The method according to claim 58, wherein
that the trigger information triggers a coordination procedure comprises: the trigger information triggers the first sidelink device to coordinate the second sidelink device to select a resource.

60. The method according to claim 58 or 59, wherein
the information about the coordination resource is used to coordinate the first sidelink device to select a resource.

61. The method according to any one of claims 56 to 60, wherein
the coordination information is trigger mechanism-based coordination information or non-trigger mechanism-based coordination information.

62. The method according to claim 61, wherein
the second-format sidelink control information comprises a first field, and the first field is used to determine that the coordination procedure information is one of the trigger information, the trigger mechanism-based coordination information, or the non-trigger mechanism-based coordination information.

63. The method according to claim 61 or 62, wherein
the non-trigger mechanism-based coordination information comprises the information about the coordination resource and a parameter of the coordination procedure; and
the parameter of the coordination procedure comprises at least one of the following information: a number of subchannels, a selection window size, a sensing window size, a period, or priority information.

64. The method according to any one of claims 56 to 63, wherein
the trigger information comprises a parameter of the coordination procedure, and the parameter of the coordination procedure comprises at least one of the following information:
a number of subchannels, a selection window size, a sensing window size, a period, or priority information.

65. A communication apparatus, comprising:
a transceiver module, configured to receive first indication information and first information; and
a processing module, configured to determine, based on the first indication information, that the first information is coordination procedure information, wherein
the coordination procedure information comprises trigger information or coordination information, the trigger information triggers a coordination procedure, and the coordination information comprises information about a coordination resource.

66. The apparatus according to claim 65, wherein the communication apparatus is a first sidelink device; and
that the transceiver module is configured to receive the first indication information and the first information comprises: the transceiver module of the first sidelink device is configured to receive the first indication information and the first information that are sent by a second sidelink device.

67. The apparatus according to claim 66, wherein
that the trigger information triggers a coordination procedure comprises: the trigger information triggers the first sidelink device to coordinate the second sidelink device to select a resource.

68. The apparatus according to claim 65 or 66, wherein
the information about the coordination resource is determined by the second sidelink device.

69. The apparatus according to any one of claims 66 to 68, wherein
the coordination resource is used to coordinate the first sidelink device to select a resource.

70. The apparatus according to any one of claims 65 to 69, wherein
the coordination information is trigger mechanism-based coordination information or non-trigger mechanism-based coordination information.

71. The apparatus according to any one of claims 65 to 70, wherein
that the processing module is configured to determine, based on the first indication information, that the first information is the coordination procedure information comprises: the processing module is configured to determine, based on the first indication information, that the coordination procedure information is the trigger information or the coordination information.

72. The apparatus according to claim 71, wherein
the transceiver module is further configured to receive sidelink control information, wherein the sidelink control information comprises 1^{st}-stage sidelink control information and 2^{nd}-stage sidelink control information; and
the first indication information indicates that the 2^{nd}-stage sidelink control information is third-format sidelink control information, and the third-format sidelink control information indicates that the first information is the trigger information; or
the first indication information indicates that the 2^{nd}-stage sidelink control information is fourth-format sidelink control information, and the fourth-format sidelink control information indicates that the first information is the coordination information.

73. The apparatus according to claim 71 or 72, wherein
that the processing module is configured to determine, based on the first indication information, that the coordination procedure information is the trigger information or the coordination information comprises: the processing module is configured to determine, based on the first indication information, that the coordination procedure information is the coordination information; and
the transceiver module is further configured to receive second indication information, wherein the second indication information indicates that the coordination information is the trigger mechanism-based coordination information or the coordination information is the non-trigger mechanism-based coordination information.

74. The apparatus according to claim 73, wherein
the coordination information comprises the second indication information.

75. The apparatus according to claim 73 or 74, wherein
the transceiver module is further configured to receive sidelink control information, wherein the sidelink control information comprises 1^{st}-stage sidelink control information and 2^{nd}-stage sidelink control information; and
the 2^{nd}-stage sidelink control information is fourth-format sidelink control information, and the second indication information is carried in a field in the fourth-format sidelink control information.

76. The apparatus according to any one of claims 71 to 75, wherein
the transceiver module is further configured to receive sidelink control information, wherein the sidelink control information comprises 1^{st}-stage sidelink control information and 2^{nd}-stage sidelink control information, and the 2^{nd}-stage sidelink control information is fourth-format sidelink control information; and
the coordination information is in the fourth-format sidelink control information; or
the coordination information is in the fourth-format sidelink control information and the 1^{st}-stage sidelink control information.

77. The apparatus according to claim 76, wherein
the fourth-format sidelink control information comprises a first field, and the first field indicates that the coordination information is in the fourth-format sidelink control information or the coordination information is in the fourth-format sidelink control information and the 1^{st}-stage sidelink control information.

78. The apparatus according to any one of claims 65 to 70, wherein
the transceiver module is further configured to receive sidelink control information, wherein the sidelink control information comprises 1^{st}-stage sidelink control information and 2^{nd}-stage sidelink control information, and the 2^{nd}-stage sidelink control information is third-format sidelink control information; and
the first indication information indicates the third-format sidelink control information, and the third-format sidelink control information indicates that the first information is the coordination procedure information.

79. The apparatus according to claim 70, wherein
the transceiver module is further configured to receive third indication information, wherein the third indication information indicates that the coordination procedure information is one of the trigger information, the trigger mechanism-based coordination information, or the non-trigger mechanism-based coordination information.

80. The apparatus according to claim 79, wherein
the transceiver module is further configured to receive sidelink control information, wherein the sidelink control information comprises 1^{st}-stage sidelink control information and 2^{nd}-stage sidelink control information; and
the 2^{nd}-stage sidelink control information is third-format sidelink control information, and the third indication information is carried in a field in the third-format sidelink control information.

81. The apparatus according to any one of claims 78 to 80, wherein the apparatus further comprises:
the transceiver module is further configured to receive sidelink control information, wherein the sidelink control information comprises 1^{st}-stage sidelink control information and 2^{nd}-stage sidelink control information, and the 2^{nd}-stage sidelink control information is third-format sidelink control information; and
the coordination information is in the third-format sidelink control information; or
the coordination information is in the third-format sidelink control information and the 1^{st}-stage sidelink control information.

82. The apparatus according to claim 81, wherein
the third-format sidelink control information comprises a second field, and the second field indicates that the coordination information is in the third-format sidelink control information or the coordination information is in the third-format sidelink control information and the 1^{st}-stage sidelink control information.

83. The apparatus according to any one of claims 65 to 82, wherein
the transceiver module is further configured to receive sidelink control information, wherein the sidelink control information comprises 1^{st}-stage sidelink control information and 2^{nd}-stage sidelink control information; and
the first indication information is carried in a reserved field in the 1^{st}-stage sidelink control information or a 2^{nd}-stage sidelink control information format field in the 1^{st}-stage sidelink control information.

84. The apparatus according to any one of claims 65 to 83, wherein
the transceiver module is further configured to receive sidelink control information, wherein the sidelink control information comprises 1^{st}-stage sidelink control information and 2^{nd}-stage sidelink control information, and the 2^{nd}-stage sidelink control information is third-format sidelink control information; and
the trigger information is in the third-format sidelink control information; or
the trigger information is in the third-format sidelink control information and the 1^{st}-stage sidelink control information.

85. The apparatus according to claim 84, wherein
the third-format sidelink control information comprises a third field, and the third field indicates that the trigger information is in the third-format sidelink control information or the trigger information is in the third-format sidelink control information and the 1^{st}-stage sidelink control information.

86. The apparatus according to any one of claims 65 to 85, wherein
the trigger information comprises a parameter of the coordination procedure, and the parameter of the coordination procedure comprises at least one of the following information:
a number of subchannels, a selection window size, a sensing window size, a period, or priority information.

87. The apparatus according to claim 70, wherein
the non-trigger mechanism-based coordination information comprises the information about the coordination resource and a parameter of the coordination procedure; and
the parameter of the coordination procedure comprises at least one of the following information: a number of subchannels, a selection window size, a sensing window size, a period, or priority information.

88. A communication apparatus, comprising:
a transceiver module, configured to receive sidelink control information; and
a processing module, configured to determine that the sidelink control information is second-format sidelink control information, wherein
the processing module is further configured to determine, based on the second-format sidelink control information, that the sidelink control information comprises coordination procedure information, wherein the coordination procedure information comprises trigger information or coordination information, the trigger information triggers a coordination procedure, and the coordination information comprises information about a coordination resource.

89. The communication apparatus according to claim 88, wherein
the sidelink control information comprises 1^{st}-stage sidelink control information and/or 2^{nd}-stage sidelink control information; and
that the processing module is configured to determine that the sidelink control information is the second-format sidelink control information comprises: the processing module is configured to determine that the 1^{st}-stage sidelink control information is the second-format sidelink control information.

90. The apparatus according to claim 88 or 89, wherein
that the transceiver module is configured to receive the sidelink control information comprises: the communication apparatus is a first sidelink device, and the transceiver module of the first sidelink device is configured to receive the sidelink control information sent by a second sidelink device.

91. The apparatus according to claim 90, wherein
that the trigger information triggers a coordination procedure comprises: the trigger information triggers the first sidelink device to coordinate the second sidelink device to select a resource.

92. The apparatus according to claim 90 or 91, wherein
the information about the coordination resource is used to coordinate the first sidelink device to select a resource.

93. The apparatus according to any one of claims 88 to 92, wherein
the coordination information is trigger mechanism-based coordination information or non-trigger mechanism-based coordination information.

94. The apparatus according to claim 93, wherein
the second-format sidelink control information comprises a first field, and the first field is used to determine that the coordination procedure information is one of the trigger information, the trigger mechanism-based coordination information, or the non-trigger mechanism-based coordination information.

95. The apparatus according to claim 93 or 94, wherein
the non-trigger mechanism-based coordination information comprises the information about the coordination resource and a parameter of the coordination procedure; and
the parameter of the coordination procedure comprises at least one of the following information: a number of subchannels, a selection window size, a sensing window size, a period, or priority information.

96. The apparatus according to any one of claims 88 to 95, wherein
the trigger information comprises a parameter of the coordination procedure, and the parameter of the coordination procedure comprises at least one of the following information:
a number of subchannels, a selection window size, a sensing window size, a period, or priority information.

97. A communication apparatus, comprising:
a processing module, configured to determine first indication information and first information; and
a transceiver module, configured to send the first indication information and the first information, wherein the first indication information is used to determine that the first information is coordination procedure information, wherein
the coordination procedure information comprises trigger information or coordination information, the trigger information triggers a coordination procedure, and the coordination information comprises information about a coordination resource.

98. The apparatus according to claim 97, wherein the communication apparatus is a second sidelink device; and
that the transceiver module is configured to send the first indication information and the first information comprises: the transceiver module of the second sidelink device is configured to send the first indication information and the first information to a first sidelink device.

99. The apparatus according to claim 98, wherein
that the trigger information triggers a coordination procedure comprises: the trigger information triggers the first sidelink device to coordinate the second sidelink device to select a resource.

100. The apparatus according to claim 98 or 99, wherein
the processing module of the second sidelink device is further configured to determine the information about the coordination resource.

101. The apparatus according to any one of claims 98 to 100, wherein
the coordination resource is used to coordinate the first sidelink device to select a resource.

102. The apparatus according to any one of claims 97 to 101, wherein
the coordination information is trigger mechanism-based coordination information or non-trigger mechanism-based coordination information.

103. The apparatus according to any one of claims 97 to 102, wherein
that the first indication information is used to determine that the first information is coordination procedure information comprises: the first indication information is used to determine that the coordination procedure information is the trigger information or the coordination information.

104. The apparatus according to claim 103, wherein
the transceiver module is further configured to send sidelink control information, wherein the sidelink control information comprises 1^{st}-stage sidelink control information and 2^{nd}-stage sidelink control information; and
the first indication information indicates that the 2^{nd}-stage sidelink control information is third-format sidelink control information, and the third-format sidelink control information indicates that the first information is the trigger information; or
the first indication information indicates that the 2^{nd}-stage sidelink control information is fourth-format sidelink control information, and the fourth-format sidelink control information indicates that the first information is the coordination information.

105. The apparatus according to claim 103 or 104, wherein
that the first indication information is used to determine that the coordination procedure information is the trigger information or the coordination information comprises: the first indication information is used to determine that the coordination procedure information is the coordination information; and
the transceiver module is further configured to send second indication information, wherein the second indication information indicates that the coordination information is the trigger mechanism-based coordination information or the coordination information is the non-trigger mechanism-based coordination information.

106. The apparatus according to claim 105, wherein
the coordination information comprises the second indication information.

107. The apparatus according to claim 105 or 106, wherein
the transceiver module is further configured to send sidelink control information, wherein the sidelink control information comprises 1^{st}-stage sidelink control information and 2^{nd}-stage sidelink control information; and
the 2^{nd}-stage sidelink control information is fourth-format sidelink control information, and the second indication information is carried in a field in the fourth-format sidelink control information.

108. The apparatus according to any one of claims 103 to 107, wherein
the transceiver module is further configured to send sidelink control information, wherein the sidelink control information comprises 1^{st}-stage sidelink control information and 2^{nd}-stage sidelink control information, and the 2^{nd}-stage sidelink control information is the fourth-format sidelink control information; and
the coordination information is in the fourth-format sidelink control information; or
the coordination information is in the fourth-format sidelink control information and the 1^{st}-stage sidelink control information.

109. The apparatus according to claim 108, wherein
the fourth-format sidelink control information comprises a first field, and the first field indicates that the coordination information is in the fourth-format sidelink control information or the coordination information is in the fourth-format sidelink control information and the 1^{st}-stage sidelink control information.

110. The apparatus according to any one of claims 97 to 102, wherein
the transceiver module is further configured to send sidelink control information, wherein the sidelink control information comprises 1^{st}-stage sidelink control information and 2^{nd}-stage sidelink control information; and
the first indication information indicates that the 2^{nd}-stage sidelink control information is third-format sidelink control information, and the third-format sidelink control information indicates that the first information is the coordination procedure information.

111. The apparatus according to claim 102, wherein
the transceiver module is further configured to send third indication information, wherein the third indication information indicates that the coordination procedure information is one of the trigger information, the trigger mechanism-based coordination information, or the non-trigger mechanism-based coordination information.

112. The apparatus according to claim 111, wherein
the transceiver module is further configured to receive sidelink control information, wherein the sidelink control information comprises 1^{st}-stage sidelink control information and 2^{nd}-stage sidelink control information; and
the 2^{nd}-stage sidelink control information is third-format sidelink control information, and the third indication information is carried in a field in the third-format sidelink control information.

113. The apparatus according to any one of claims 100 to 112, wherein the apparatus further comprises:
the transceiver module is further configured to send sidelink control information, wherein the sidelink control information comprises 1^{st}-stage sidelink control information and 2^{nd}-stage sidelink control information, and the 2^{nd}-stage sidelink control information is third-format sidelink control information; and
the coordination information is in the third-format sidelink control information; or
the coordination information is in the third-format sidelink control information and the 1^{st}-stage sidelink control information.

114. The apparatus according to claim 113, wherein
the third-format sidelink control information comprises a second field, and the second field indicates that the coordination information is in the third-format sidelink control information or the coordination information is in the third-format sidelink control information and the 1^{st}-stage sidelink control information.

115. The apparatus according to any one of claims 97 to 114, wherein
the transceiver module is further configured to receive sidelink control information, wherein the sidelink control information comprises 1^{st}-stage sidelink control information and 2^{nd}-stage sidelink control information; and
the first indication information is carried in a reserved field in the 1^{st}-stage sidelink control information or a 2^{nd}-stage sidelink control information format field in the 1^{st}-stage sidelink control information.

116. The apparatus according to any one of claims 97 to 115, wherein
the transceiver module is further configured to receive sidelink control information, wherein the sidelink control information comprises 1^{st}-stage sidelink control information and 2^{nd}-stage sidelink control information, and the 2^{nd}-stage sidelink control information is third-format sidelink control information; and
the trigger information is in the third-format sidelink control information; or
the trigger information is in the third-format sidelink control information and the 1^{st}-stage sidelink control information.

117. The apparatus according to claim 116, wherein
the third-format sidelink control information comprises a first field, and the first field indicates that the trigger information is in the third-format sidelink control information or the trigger information is in the third-format sidelink control information and the 1^{st}-stage sidelink control information.

118. The apparatus according to any one of claims 97 to 117, wherein
the trigger information comprises a parameter of the coordination procedure, and the parameter of the coordination procedure comprises at least one of the following information:
a number of subchannels, a selection window size, a sensing window size, a period, or priority information.

119. The apparatus according to claim 102, wherein
the non-trigger mechanism-based coordination information comprises the information about the coordination resource and a parameter of the coordination procedure; and
the parameter of the coordination procedure comprises at least one of the following information: a number of subchannels, a selection window size, a sensing window size, a period, or priority information.

120. A communication apparatus, comprising:
a processing module, configured to determine sidelink control information; and
a transceiver module, configured to send the sidelink control information, wherein
the sidelink control information is second-format sidelink control information; and
the second-format sidelink control information is used to determine that the sidelink control information comprises coordination procedure information, the coordination procedure information comprises trigger information or coordination information, the trigger information triggers a coordination procedure, and the coordination information comprises information about a coordination resource.

121. The apparatus according to claim 120, wherein
the sidelink control information comprises 1^{st}-stage sidelink control information and/or 2^{nd}-stage sidelink control information; and
that the sidelink control information is second-format sidelink control information comprises: the 1^{st}-stage sidelink control information is the second-format sidelink control information.

122. The apparatus according to claim 120 or 121, wherein
that the transceiver module is configured to send the sidelink control information comprises: the communication apparatus is a second sidelink device, and a transceiver module of the second sidelink device is configured to send the sidelink control information to a first sidelink device.

123. The apparatus according to claim 122, wherein
that the trigger information triggers a coordination procedure comprises: the trigger information triggers the first sidelink device to coordinate the second sidelink device to select a resource.

124. The apparatus according to claim 122 or 123, wherein
the information about the coordination resource is used to coordinate the first sidelink device to select a resource.

125. The apparatus according to any one of claims 120 to 124, wherein
the coordination information is trigger mechanism-based coordination information or non-trigger mechanism-based coordination information.

126. The apparatus according to claim 124, wherein
the second-format sidelink control information comprises a first field, and the first field is used to determine that the coordination procedure information is one of the trigger information, the trigger mechanism-based coordination information, or the non-trigger mechanism-based coordination information.

127. The apparatus according to claim 125 or 126, wherein
the non-trigger mechanism-based coordination information comprises the information about the coordination resource and a parameter of the coordination procedure; and
the parameter of the coordination procedure comprises at least one of the following information: a number of subchannels, a selection window size, a sensing window size, a period, or priority information.

128. The apparatus according to any one of claims 120 to 127, wherein
the trigger information comprises a parameter of the coordination procedure, and the parameter of the coordination procedure comprises at least one of the following information:
a number of subchannels, a selection window size, a sensing window size, a period, or priority information.

129. A communication apparatus, comprising:
a transceiver and a processor, wherein the transceiver is configured to execute instructions for receiving and sending information; and when the instructions are run by the processor, the communication apparatus is enabled to perform the method according to any one of claims 1 to 23.

130. A communication apparatus, comprising:
a transceiver and a processor, wherein the transceiver is configured to execute instructions for receiving and sending information; and when the instructions are run by the processor, the communication apparatus is enabled to perform the method according to any one of claims 24 to 32.

131. A communication apparatus, comprising:
a transceiver and a processor, wherein the transceiver is configured to execute instructions for receiving and sending information; and when the instructions are run by the processor, the communication apparatus is enabled to perform the method according to any one of claims 33 to 55.

132. A communication apparatus, comprising:
a transceiver and a processor, wherein the transceiver is configured to execute instructions for receiving and sending information; and when the instructions are run by the processor, the communication apparatus is enabled to perform the method according to any one of claims 56 to 64.

133. A computer-readable storage medium, wherein
the computer-readable storage medium stores a computer program, and the program is executed by a processor to perform the method according to any one of claims 1 to 23.

134. A computer-readable storage medium, wherein
the computer-readable storage medium stores a computer program, and the program is executed by a processor to perform the method according to any one of claims 24 to 32.

135. A computer-readable storage medium, wherein
the computer-readable storage medium stores a computer program, and the program is executed by a processor to perform the method according to any one of claims 33 to 55.

136. A computer-readable storage medium, wherein
the computer-readable storage medium stores a computer program, and the program is executed by a processor to perform the method according to any one of claims 56 to 64.

137. A communication apparatus, comprising a memory and a processor, wherein the memory is configured to store instructions, and the processor is configured to: execute the instructions stored in the memory, and perform the method according to any one of claims 1 to 23 based on the instructions stored in the memory.

138. A communication apparatus, comprising a memory and a processor, wherein the memory is configured to store instructions, and the processor is configured to: execute the instructions stored in the memory, and perform the method according to any one of claims 24 to 32 based on the instructions stored in the memory.

139. A communication apparatus, comprising a memory and a processor, wherein the memory is configured to store instructions, and the processor is configured to: execute the instructions stored in the memory, and perform the method according to any one of claims 33 to 55 based on the instructions stored in the memory.

140. A communication apparatus, comprising a memory and a processor, wherein the memory is configured to store instructions, and the processor is configured to: execute the instructions stored in the memory, and perform the method according to any one of claims 56 to 64 based on the instructions stored in the memory.

141. A communication system, comprising the communication apparatus according to any one of claims 63 to 85 and the communication apparatus according to any one of claims 97 to 119.

142. A communication system, comprising the communication apparatus according to any one of claims 86 to 93 and the communication apparatus according to any one of claims 120 to 128.

143. A computer program, wherein when the computer program is run on a computer, the computer is enabled to perform the communication method according to any one of claims 1 to 23.

144. A computer program, wherein when the computer program is run on a computer, the computer is enabled to perform the communication method according to any one of claims 24 to 32.

145. A computer program, wherein when the computer program is run on a computer, the computer is enabled to perform the communication method according to any one of claims 33 to 55.

146. A computer program, wherein when the computer program is run on a computer, the computer is enabled to perform the communication method according to any one of claims 56 to 64.
